# EUROPEAN PATENT SPECIFICATION

(11) **EP 4 521 245 B1**
(45) Date of publication and mention of the grant of the patent: **30.09.2026**
(21) Application number: 24194529.4
(22) Date of filing: 14.08.2024
(51) Int. Cl.: G06F 9/48, B64G 1/10, H04B 7/185

(54) **METHODS AND SYSTEMS FOR DISTRIBUTED TASK SCHEDULING IN SATELLITE CLUSTER FOR EARTH OBSERVATION DATA ANALYTICS**
VERFAHREN UND SYSTEME ZUR VERTEILTEN AUFGABENPLANUNG IN EINEM SATELLITENCLUSTER ZUR ERDBEOBACHTUNGSDATENANALYSE
PROCÉDÉS ET SYSTÈMES DE PLANIFICATION DE TÂCHES DISTRIBUÉES DANS UNE GRAPPE DE SATELLITES POUR L'ANALYSE DE DONNÉES D'OBSERVATION DE LA TERRE

(30) Priority: 11.09.2023 IN 202321061085
(43) Date of publication of application: 12.03.2025
(73) Proprietor: Tata Consultancy Services Limited, Maharashtra (IN)
(72) Inventor: BISWAS, SWAGATA, 700160 Kolkata, West Bengal (IN); PAUL, HIMADRI SEKHAR, 700160 Kolkata, West Bengal (IN)
(74) Representative: Goddar, Heinz J.

(56) References cited:
- CN-A- 105 654 220
- HAN JIARONG ET AL: "Task Scheduling of High Dynamic Edge Cluster in Satellite Edge Computing", 2020 IEEE WORLD CONGRESS ON SERVICES (SERVICES), 1 October 2020 (2020-10-01), pages 287 - 293, XP093195541, DOI: 10.1109/SERVICES48979.2020.00063
- HU YIFEI ET AL: "An On-Orbit Task-Offloading Strategy Based on Satellite Edge Computing", SENSORS, vol. 23, no. 9, 25 April 2023 (2023-04-25), CH, pages 4271, XP093195569, ISSN: 1424-8220, DOI: 10.3390/s23094271

## Description

### CROSS-REFERENCE TO RELATED APPLICATIONS AND PRIORITY

The present application claims priority to Indian application no. 202321061085, filed on September 11, 2023.

### TECHNICAL FIELD

The disclosure herein generally relates to the field of orbital edge computing (OEC), and more specifically to methods and systems for distributed task scheduling in a satellite cluster for earth observation data analytics.

### BACKGROUND

Orbital edge computing (OEC) is gaining interest in multiple application domains due to its potential to mitigate the limitations of traditional bent pipe architecture through in-orbit processing. Although processing capability of a single satellite is constrained, a collective computing power of a constellation is substantial and can be potentially exploited for effective distributed in-orbit data processing. Further, the state-of-the-art studies reveal that the researchers have identified the importance of orbital edge computing to improve the response time. In one study it was observed that on-board computing facility is idle for about 80% of its mission period. Researchers have made significant contribution in designing suitable scheduling techniques to gather earth observation data and suitable routing algorithms to route the data gathered to the ground. However, utilizing the on-board computing facility to the maximum extent possible and the scheduling techniques proposed for earth observation data analytics in the orbit are limited and not efficient. Document (HAN JIARONG ET AL: "Task Scheduling of High Dynamic Edge Cluster in Satellite Edge Computing") discloses a traditional satellite mission processing mode, the data is transmitted to the ground data center for processing. However, with the expansion and enrichment of satellite services, the huge amount of data leads to longer data transmission time and greater bandwidth pressure. Furthermore, time-sensitive satellite missions do not respond in a timely manner. In recent years, the emergence of mobile edge computing (MEC) provides a new mode for users to utilize the computing power of network edge side nodes for data processing. At the same time, the satellite information network has realized the interconnection of low-orbit satellites, realized the integration of computing power of dispersed satellites, and provided enough computing power to assist the processing of satellite big data tasks and time-sensitive tasks. It can be seen that introducing the mobile edge computing model into the satellite information network has become an effective way to solve the above problems. In this paper, we first introduce a satellite moving edge computing framework and analyze the particularity of the scene. Secondly, we modeled the task scheduling problem of mobile edge computing clusters in the satellite dynamic environment and proposed a satellite task time optimization scheduling algorithm based on dynamic priority queue (SDPLS). Experiments show that the algorithm can adapt to highly dynamic satellite network conditions, shorten the task response delay, and realize the efficient utilization of satellite cluster computing resources (Abstract). Document (Hu Yifei ET AL: "An On-Orbit Task-Offloading Strategy Based on Satellite Edge Computing") discloses a satellite edge computing has attracted the attention of many scholars due to its extensive coverage and low delay. Satellite edge computing research remains focused on on-orbit task scheduling. However, existing research has not considered the situation where heavily loaded satellites cannot participate in offloading. To solve this problem, this study first models the task scheduling of dynamic satellite networks as a minimization problem that considers both the weighted delay and energy consumption. In addition, a hybrid genetic binary particle swarm optimization (GABPSO) algorithm is proposed to solve this optimization problem. The simulation results demonstrate that the proposed method outperforms the other three baseline algorithms (Abstract). Document (CN 105 654 220 A) discloses a multi-satellite combined observation method and system. The method comprises: an observation task is decomposed into sub tasks according to a setting strategy, wherein the sub tasks correspond to constraints and indexes; on the basis of satellite resources and the constraints of the sub tasks, resource constraint screening is carried out to obtain matched satellites of the sub tasks; the sub tasks are sent to the matched satellites to obtain task scheduling results returned by the matched satellites; the task scheduling results are evaluated according to the indexes of the sub tasks and a preset evaluation rule; target satellites corresponding to the sub tasks are determined from the matched satellites based on the evaluation results; and then the sub tasks are distributed to the corresponding target satellites for execution. According to the invention, the in-orbit usage efficiency of the satellite can be utilized fully; the expansibility and the calculation efficiency are high; complex tasks can be executed by utilizing complex satellite resources; and thus an effect of rapid task planning and execution for multi-satellite combined observation can be realized (Abstract).

### SUMMARY

Embodiments of the present disclosure present technological improvements as solutions to one or more of the above-mentioned technical problems recognized by the inventors in conventional systems. The invention is set out in appended set of claims.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is an exemplary block diagram of a system for distributed task scheduling in a satellite cluster for earth observation data analytics, in accordance with some embodiments of the present disclosure.
FIGS. 2A-2C illustrate exemplary flow diagrams of a processor-implemented method for distributed task scheduling in a satellite cluster for earth observation data analytics, using the system of FIG. 1, in accordance with some embodiments of the present disclosure.
FIG. 3 illustrates an exemplary task workflow in a direct acyclic graph (DAG) structure, in accordance with some embodiments of the present disclosure.
FIG. 4 illustrates an exemplary task workflow in the direct acyclic graph (DAG) structure where the task is topologically sorted and arranged into levels of execution in a serial mode, in accordance with some embodiments of the present disclosure.
FIGS. 5A-5C illustrate exemplary task workflows in the direct acyclic graph (DAG) structure, with a handover mechanism in a serial mode, in accordance with some embodiments of the present disclosure.
FIG. 6 illustrates an exemplary task workflow in the direct acyclic graph (DAG) structure where the task is topologically sorted and arranged into levels of execution in a parallel mode, in accordance with some embodiments of the present disclosure.
FIGS. 7A-7C illustrate exemplary task workflows in the direct acyclic graph (DAG) structure, with a task partitioning and a task distribution in a parallel mode, in accordance with some embodiments of the present disclosure.
FIG. 8 is a flow diagram for handing over the single subtask to other satellites for execution using the handover mechanism in a serial mode, in accordance with some embodiments of the present disclosure.
FIG. 9 is a flow diagram for handing over the multiple subtasks, to other satellites for execution in the parallel mode using the task partitioning and the task distribution, in accordance with some embodiments of the present disclosure.
FIG. 10 is a graph showing a percentage improvement in execution time using task distribution while collecting data from a single continuous target area, in accordance with some embodiments of the present disclosure.
FIG. 11 is a graph showing a percentage improvement in execution time using task distribution while collecting data from discontinuous target area, in accordance with some embodiments of the present disclosure.
FIG. 12 is a graph showing a communication latency during the serial execution and the parallel execution of task, in accordance with some embodiments of the present disclosure.
FIG. 13 is a graph showing a percentage improvement in the execution time using the parallel execution with increasing number of satellites, in accordance with some embodiments of the present disclosure.
FIG. 14 is a graph showing a percentage improvement in the execution time with parallel execution of task, in accordance with some embodiments of the present disclosure.
FIG. 15 is a graph showing a percentage reduction in the waiting time with parallel execution of task, in accordance with some embodiments of the present disclosure.
FIG. 16 is a graph showing a percentage improvement in the execution time and the percentage reduction in the waiting time with the parallel execution with increasing number of subtasks, in accordance with some embodiments of the present disclosure.
FIG. 17 is a graph showing a percentage improvement in execution time and percentage reduction in the waiting time with parallel execution with increasing degree of parallelism, in accordance with some embodiments of the present disclosure.
FIG. 18 is a graph showing a percentage improvement in execution time during cloud detection with varying task size using task handover and task distribution, in accordance with some embodiments of the present disclosure.
FIG. 19 is a graph showing a percentage improvement in execution time during cloud detection with varying number of tasks using task handover and task distribution, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Application of small satellite constellations is increasing for remote sensing applications due to their attractive cost-performance ratio. The small satellite constellations are not only being used for earth observation (EO), but also as space-based communication infrastructure, and even for deep-space observation and explorations. The small satellite constellation is capable of gathering high-fidelity data both in a spatial domain and a temporal domain, i.e., they generate a high volume of data with a higher speed. Transportation of this high volume of data with the high speed gathered remains a challenge for these satellites due to their time-limited visibility to ground stations. On the other hand, computing payloads in satellites remain idle for majority of the times during its mission.

Orbital edge computing (OEC) was proposed in the art for data analytic at the source (at satellite end) to reduce the data transfer volume to ground stations. Although the computation capability of individual satellites is limited, collectively a constellation can offer significant computing power such that raw data collected can be processed in-orbit. Future small satellites payloads will see significant increase in computing capability and distributed in-orbit data analytic will become a norm.

The idea of the orbital edge computing (OEC) was introduced to utilize on-board processing of the raw earth observation data by the satellites. They show that this is more resource efficient than sending the raw data to ground station for processing. However, in the context of mission control for the satellite constellation, computation of a data collection schedule for a set of satellites is a hard problem. A scheduling technique was proposed to maximize the area of observation, taking into consideration hardware constraints, orbital mechanics, and attitude control of the CubeSats in a constellation. Although, the constellation is completely controlled from the ground station, the onboard scheduling and inter-satellite communication are incorporated.

Some conventional techniques utilized a complete search, heuristic search, and swarm intelligence optimization techniques to identify a subset of the satellite cluster to perform earth observation task at an affordable cost. In one conventional technique, the authors have proposed a weighted-sums optimization approach to the schedule tasks, where a wide range of applications such as earth observation, telecommunication mission, and disaster aid are considered. In another conventional technique, the authors have considered the scheduling problem as a multi-objective optimization problem. In another conventional technique, the authors have demonstrated the benefit of using both downlink and crosslink to route the observed data to the ground station, where a significant reduction in the latency to route the collected data to the ground was demonstrated.

In another conventional technique, the authors have presented a review of a CubeSat constellation mission for earth observation highlighting the data loss incurred due to high data rate, limited storage capability and time-limited visibility to ground stations for data transfer. However, utilizing the on-board computing facility to the maximum extent possible and the scheduling techniques proposed for earth observation data analytics in the orbit are limited and not efficient. The effective exploitation of the power of distributed computing in the constellation require an effective task scheduling and management.

The present disclosure solves the technical problems in the art with the methods and systems for distributed task scheduling in a satellite cluster for earth observation data analytics. The methods and systems of the present disclosure address the problem of the effective utilization of the idle computing resource available in the in-orbit satellite constellation. The methods and systems of the present disclosure propose the distributed task scheduling technique for managing distributed execution of data analytic workflows.

The methods and systems of the present disclosure propose a distributed scheduling algorithm called data analytics for low earth orbit satellites (DALEOS), for small satellite clusters targeted to meet real-time constraints of data analysis tasks. The methods and systems of the present disclosure efficiently utilizes the constrained resources through workflow partitioning and task distribution. This reduces the idle time of the small satellite clusters and improves the overall response time.

Given a system comprising of a set of ground stations and a constellation of small satellites, the distributed scheduling algorithm of the present disclosure utilizes both the idle time of on-board computing resources available in the constellation (satellites) and the computing capability at the ground stations, in a distributed manner. The distributed scheduling algorithm of the present disclosure further uses an optimization technique to reduce an overall make-span of the task workflow and thereby may be suitable for EO applications with soft-real time constraints.

The distributed scheduling algorithm of the present disclosure works in two phases. The first phase is referred as an offline or a static phase and the second phase is referred as an online or a dynamic phase. A set of tasks are submitted to the system for the execution. Each task is an earth observation workflow to gather data by satellites for a user defined region on earth for the data analytic workflow and further communicate to the ground stations. Hence each task in the workflow contains subtasks including an observation task, data analytic task using a machine learning (ML) or a deep learning (DL) model, and a communication task. The first subtask in each task in the workflow is assumed to be the observation task (data collection by satellites) in the present disclosure.

In the offline phase, a scheduler takes the first subtask of each task submitted to the system for execution, the soft real-time constraints defined by the user and the resource capabilities to schedule the tasks. The first subtask of each task is to be an observation task. The data analytic is supposed to be performed on the data observed and the inference finally communicated to the ground station. The soft real-time constraints refer to the user-defined acceptable latency in executing the defined tasks. The resources are the ground stations and the satellite constellation. The resource capabilities refer to the resources including storage, computing, and communicating capability.

In the dynamic phase, the scheduler takes the changing inter-satellite and satellite-to-ground station connectivity, changing the resource status as well as the changing task status to schedule the tasks. In the dynamic phase, the objective at a given instance of time is to minimize the make-span through local optimization. This is achieved through a task partitioning, a task distribution, and a task handover. The two-phase structure of the distributed scheduling algorithm for earth observation data analytics in low earth orbit (LEO) satellites, utilizes the collective compute power in-orbit and the ground that may be suitable to meet the soft real time constraints of various EO applications.

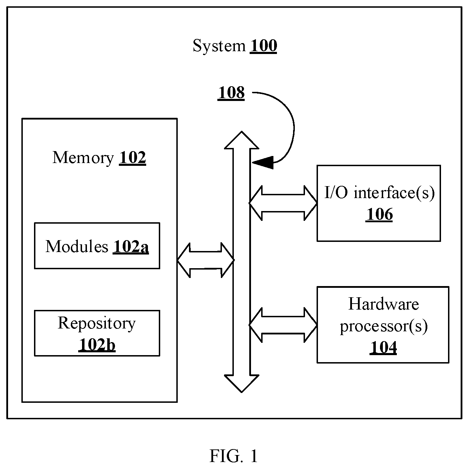

Referring now to the drawings, and more particularly to FIG. 1 through FIG. 19, where similar reference characters denote corresponding features consistently throughout the figures, there are shown preferred embodiments and these embodiments are described in the context of the following exemplary systems and/or methods.

FIG. 1 is an exemplary block diagram of a system 100 for distributed task scheduling in a satellite cluster for earth observation data analytics, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

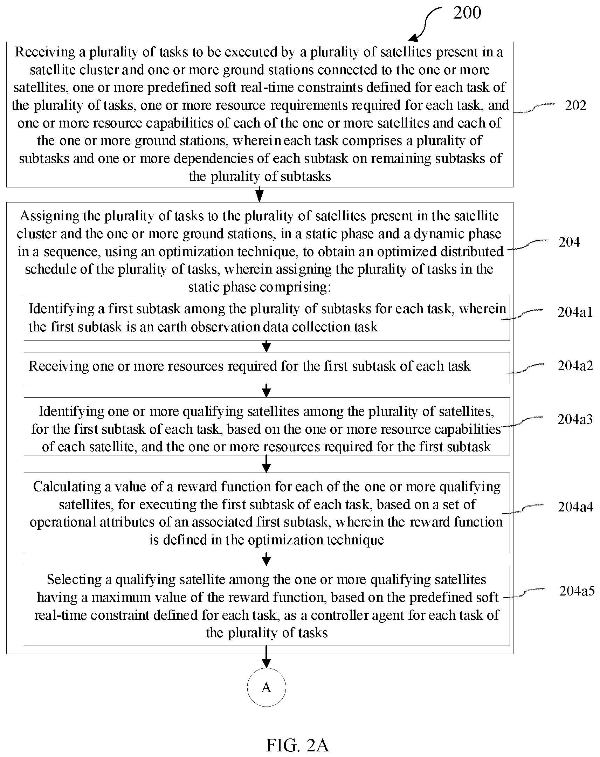

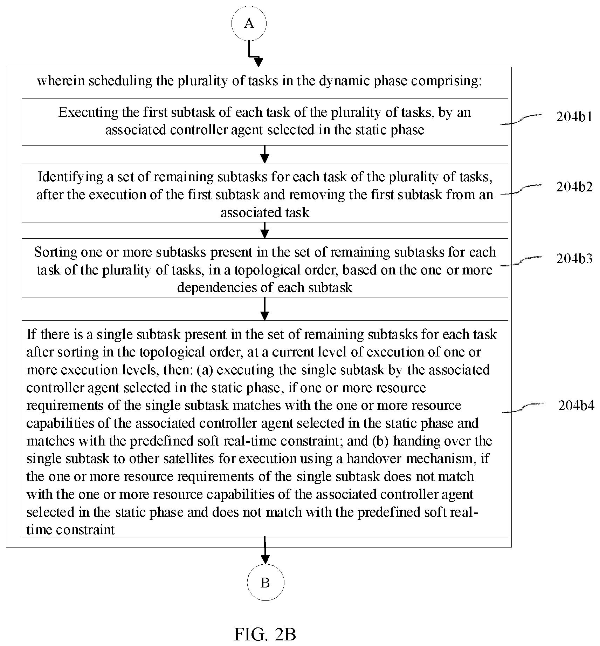

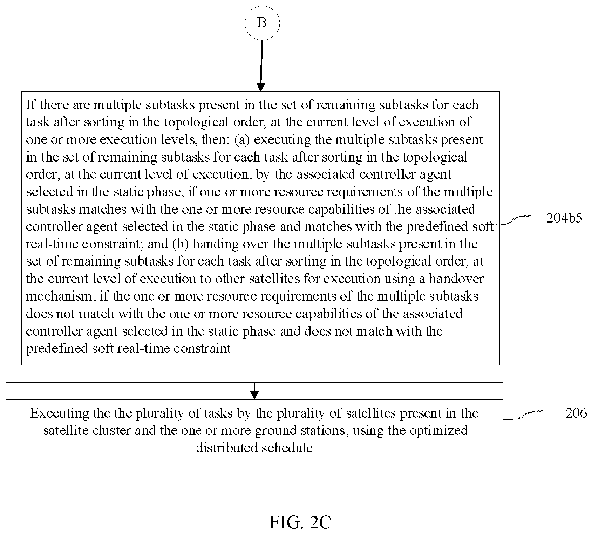

Referring to FIGS. 2A-2C, components and functionalities of the system 100 are described in accordance with an example embodiment of the present disclosure. For example, FIGS. 2A-2C illustrate exemplary flow diagrams of a processor-implemented method 200 for distributed task scheduling in a satellite cluster for earth observation data analytics, using the system 100 of FIG. 1, in accordance with some embodiments of the present disclosure. Although steps of the method 200 including process steps, method steps, techniques or the like may be described in a sequential order, such processes, methods, and techniques may be configured to work in alternate orders. **In** other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 202 of the method 200, the one or more hardware processors 104 of the system 100 are configured to receive a plurality of tasks to be executed by a plurality of satellites present in a satellite cluster and one or more ground stations connected to the one or more satellites, a predefined soft real-time constraint defined for each task of the plurality of tasks, one or more resource requirements required for each task, and one or more resource capabilities of each of the one or more satellites and each of the one or more ground stations. The plurality of satellites in the satellite cluster refer to the satellites under the satellite constellation. In an embodiment, the plurality of satellites in the satellite cluster may constellate at various hop levels. For example, some satellites out of the plurality of satellites may constellate at a first hop level. In another example, one satellite alone may constellate at second hop level, and so on.

Each task of the plurality of tasks includes a plurality of subtasks, each subtask includes one or more dependencies on remaining subtasks of the plurality of subtasks. In an embodiment, the plurality of subtasks present in each task are one or more of: (i) an earth observation data collection task, (ii) one or more earth observation data analytics tasks, and (iii) one or more earth observation data communication tasks. In an embodiment, a task may include one earth observation data collection task, one earth observation data analytics task and one earth observation data communication task. In another embodiment, the task may include one earth observation data collection task, multiple earth observation data analytics tasks, and one earth observation data communication task. Further in another embodiment, the task may include one earth observation data collection task, one earth observation data analytics task, and multiple earth observation data communication tasks. Further in another embodiment, the task may include one earth observation data collection task, the multiple earth observation data analytics tasks, and the multiple earth observation data communication tasks.

In an embodiment, each earth observation data collection task of the one or more earth observation data collection tasks is defined to gather an earth observation data by each of the one or more satellites for a predefined region on the earth. In an embodiment, each earth observation data analytics task of the one or more earth observation data analytics tasks is defined to analyze the earth observation data either by the plurality of satellites or by the one or more ground stations, or a combination thereof, to determine one or more inferences of an associated earth observation data collection task.

In an embodiment, each earth observation data communication task of the one or more earth observation data communication tasks is defined as one of (i) a data exchange subtask and (ii) a command exchange subtask, between the one or more satellites and the one or more ground stations. In an embodiment, the data exchange subtask is to exchange the data either between the one or more satellites, or between the one or more ground stations, or a combination thereof. Similarly, in an embodiment, the command exchange subtask is to exchange the command either between the one or more satellites, or between the one or more ground stations, or a combination thereof.

Each subtask of the plurality of subtasks present in each task, is associated with a set of operational attributes comprising (i) a waiting time, (ii) a computational latency, (iii) a communication latency, and (iv) a task priority. In an embodiment, the waiting time of the subtask (or the task) can be defined as the time lapsed since the corresponding subtask (or the task) is ready for execution. The computational latency of the subtask (or the task) is defined as the time required to execute the corresponding subtask (or the task) and the communication latency of the subtask (or the task) is defined as the communication delay caused due to message and data exchange between agents during subtask (or the task) assignment. The task priority of the subtask (or the task) defines a priority over the other subtasks (or the task) during the execution.

The plurality of subtasks present in each task are executed at one or more execution levels, based on the one or more dependencies of each subtask on remaining subtasks of the plurality of subtasks. The one or more execution levels defines the execution instances of each subtask based on its dependencies on the remaining subtasks. In an embodiment, each task is defined in a directed acyclic graph (DAG) structure with a predefined task workflow for the execution based on the dependencies. In the context of the present disclosure, the first subtask present in each task is the earth observation data collection task which deals with fundamental data collection of earth by the one or more satellites in the constellation. In the context of the present disclosure, the second subtask present in each task is considered to be one of the earth observation data analytics task and the earth observation data communication task.

In an embodiment, the predefined soft real-time constraint is a maximum processing delay which is defined as a completion time within which the corresponding task to be completed.

In an embodiment, the one or more resource requirements required for each task includes but are not limited to a required storage to complete the corresponding task, a required central processing unit (CPU) cycles required (a processing power) to complete the corresponding task, and a communication bandwidth or a sensing capability required to accomplish the corresponding task.

In an embodiment, the one or more resource capabilities of each of the one or more satellites and each of the one or more ground stations includes but are not limited to a storage or a memory capacity, a processing or a computing capability, and a communication bandwidth or a sensing capability.

At step 204 of the method 200, the one or more hardware processors 104 of the system 100 are configured to assign the plurality of tasks to the plurality of satellites present in the satellite cluster and the one or more ground stations, received at step 202 of the method 200, to obtain an optimized distributed schedule of the plurality of tasks. Assigning the plurality of tasks to the plurality of satellites present in the satellite cluster and the one or more ground stations is done in two phases. The first phase is referred as the offline or the static phase and the second phase is referred as the online or the dynamic phase. The two phases are executed in a sequence which mean the assignment is first done in the static phase and then followed by the dynamic phase. Further an optimization technique is employed during the task assignment to obtain the optimized distributed schedule of the plurality of tasks.

Given a small satellite cluster, a set of ground stations and a set of tasks, our objective is to schedule the tasks such that the overall execution time (makespan) is minimized. The satellites and the ground stations are referred as agents in the present disclosure and the earth observation (EO) analytic workflow is considered as the task. Consider a task *T* is a collection of sub-tasks denoted as *T* = {*T*₁, *T*₂, *...* , *Tₙ*} where *T*₁, *T*₂, ..., *Tₙ* are the subtasks. The sub-tasks can be of three basic types - the earth observation data collection task, the earth observation data analytics task, and the earth observation data communication task. The order of execution of the sub-tasks (i.e., the workflow) are pre-defined and represented as a DAG, G *= < V, E* >. Here, *G* represents the directed acyclic graph. *V* represents a set of vertices denoting the sub-tasks. For example, the sub-task can be the ML based inference. *E* represents a set of directed edges denoting dependency between the sub-tasks.

In the context of EO-based data collection and analytic, the data is first collected from the given target area by one or more satellites, and then the observed data is analyzed, and the inferred output is communicated to the target agent which is to be the nearest ground station available.

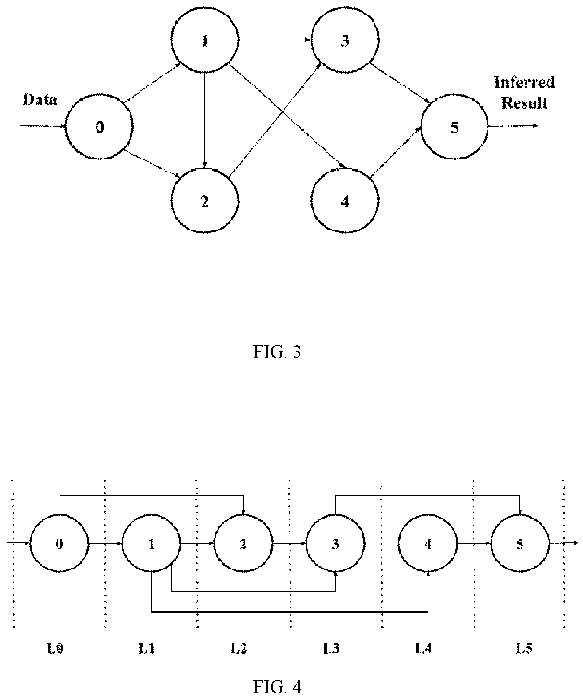

The earth observation data collection task or simply the data collection task is represented as a tuple < *GP, R* >. where *R* denotes the radius around the ground point *GP* to be observed and *GP* is specified as a latitude-longitude pair. In an embodiment, the ground points, radius of the circular area around each ground point to be observed, task workflow, resource requirement of each sub-task, resource capabilities and the ground stations are either user-defined or system derived. FIG. 3 illustrates an exemplary task workflow in the direct acyclic graph (DAG) structure, in accordance with some embodiments of the present disclosure. In the FIG. 3, 0, 1, 2, 3, 4, 5 are the subtasks and the inferred result (inference) is obtained once all the subtasks are completed.

In the offline or the static mode, each task T is assigned to an agent known as the controller agent for the task. The controller agent is chosen such that the resource requirements of the first subtask can be fulfilled by it. Each agent gathers some reward points defined by the optimization function for successful execution of a sub-task. Each agent tries to maximize the total reward gained at every instance of time. Each sub-task *Tᵢ* ∈ *T* is associated with a set of operational attributes denoted as the tuple $\left〈{T}_{i}^{P}, {T}_{i}^{S}, {T}_{i}^{Q}, {T}_{i}^{C}\right〉$, where ${T}_{i}^{P}$ is the estimated processing time, ${T}_{i}^{S}$ denotes the submission time of the sub-task in the system, while ${T}_{i}^{Q}$ represents its priority, and ${T}_{i}^{C}$ denotes the completion status of the sub-task. While choosing the controller agent for each task, the reward gained is evaluated using the following reward function and the agent with the highest estimated value of the reward function is assigned the sub-task. ${R}_{i} ∝ \frac{{T}_{i}^{Q}}{{T}_{i}^{wt} {L}_{COMP} \left({T}_{\left.i\right)}\right. {L}_{COMM} \left({T}_{\left.i\right)}\right.}$ where, ${T}_{i}^{wt}$ is the waiting time of the subtask. *L_{COMP}*(*T*_{*i*)} is the computational latency of the subtask and *L_{COMM}*(*T*_{*i*)} is the communication latency of the subtask. Here, the computational latency *L_{COMP}*(*T*_{*i*)}, and the communication latency *L_{COMM}*(*T*_{*i*)} are initialized using the initial resource configuration.

In the online or the dynamic mode, the tasks are executed in two modes namely- a serial mode and a parallel mode. In the serial mode of execution, the DAG representing the task is first topologically sorted and arranged into levels of execution. FIG. 4 illustrates an exemplary task workflow in the direct acyclic graph (DAG) structure where the task is topologically sorted and arranged into levels of execution in a serial mode, in accordance with some embodiments of the present disclosure. As shown in FIG. 4, at each level of execution (L0, L1, ..., L5), there is a single subtask (0, 1, ..., 5) to be executed. After the completion of the first subtask (subtask 0), the controller agent matches the resource requirements of the next subtask in pipeline with its own resource capabilities. If it matches, it continues execution of the next subtask. If it does not match, the controller agent initiates a handover mechanism.

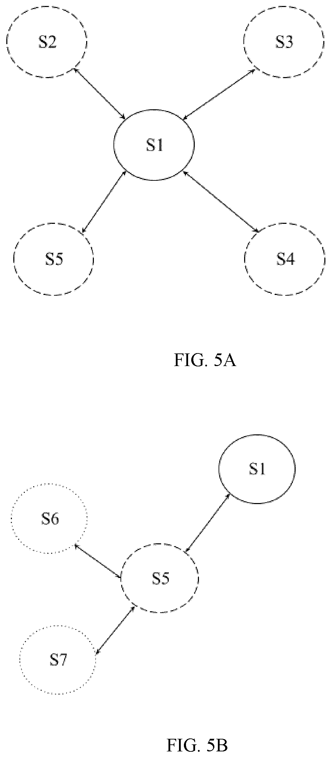

FIGS. 5A-5C illustrate exemplary task workflows in the direct acyclic graph (DAG) structure, with a handover mechanism in a serial mode, in accordance with some embodiments of the present disclosure. As shown in FIGS. 5A-5C, S1, S2, S3, S4, S5, S6, S7 are the satellites in the satellite cluster with the S1 as the controller agent in the first instance (FIG. 5A).

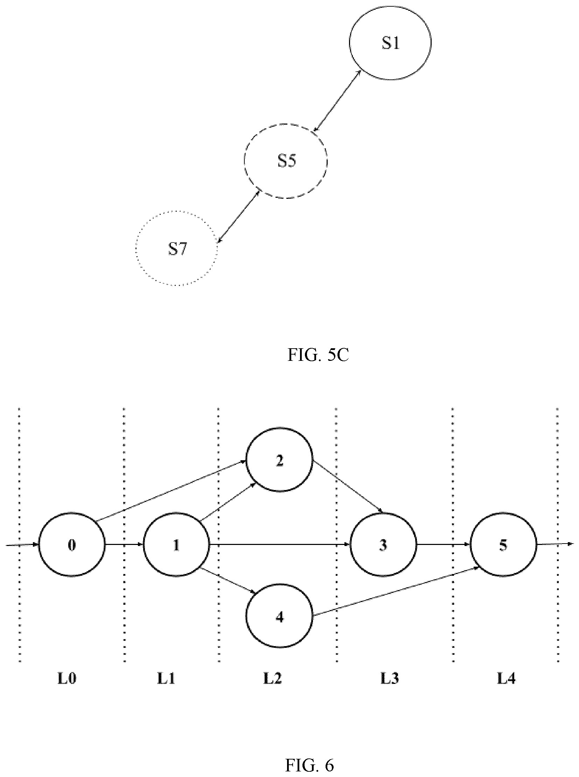

In the handover mechanism, the controller agent determines the next controller agent for handover through a voting mechanism. At first, the controller agent searches for the most suitable agent with the required resource availability and capability to execute the subtask within its one hop distance as shown in FIGS. 5A-5C. If it is not found, the controller agent sends a message querying for the suitable agent with the resource requirements to the agent, within 1-hop distance, that closely matches the resource requirements. Here, it is S5 as shown in FIG. 5A. This agent then queries within its 1 hop distance as shown in FIG. 5B if any agent has the required resource availability. In this way, the controller agent searches within its h hop distance the most suitable agent for handover. Once the agent is discovered, the controller agent handovers the subtask along with the corresponding complete task workflow to this agent. Here, it is S7 as shown in FIG. 5C. Also, the new agent discovered now becomes the controller agent for that specific task. In this way the task execution continues until it is completed.

Below is an algorithm or a pseudocode for executing the tasks in the serial mode using the handover mechanism:

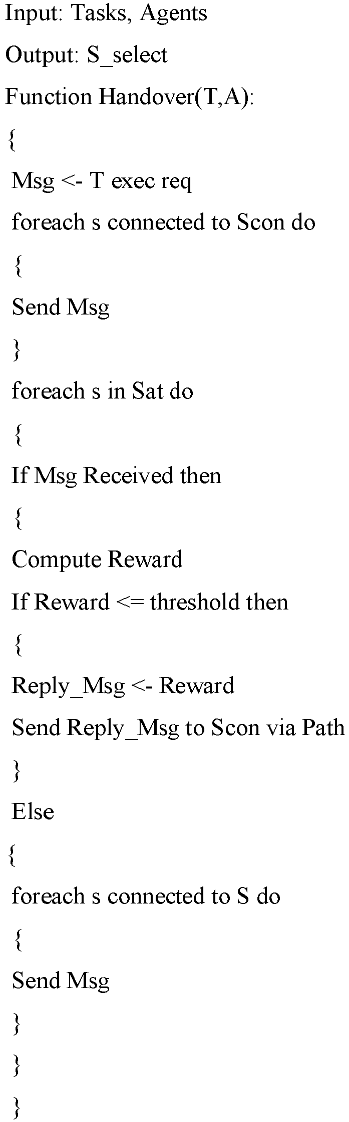

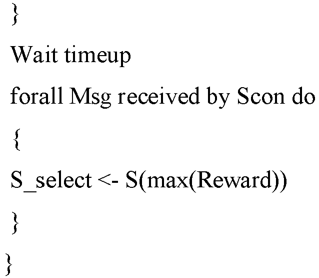

In the parallel mode of execution, the DAG is topologically sorted, and the subtasks are arranged into levels of execution. FIG. 6 illustrates an exemplary task workflow in the direct acyclic graph (DAG) structure where the task is topologically sorted and arranged into levels of execution in a parallel mode, in accordance with some embodiments of the present disclosure. As shown in FIG. 6, each level of execution comprises of the subtasks that can be executed concurrently. For example, the subtasks 2 and 4 of the FIG. 6 can be executed concurrently. When there is a single subtask to be executed in any level of execution, the controller agent matches the resource requirements of the subtask with its own resource availability and capability. If it matches, the controller agent continues the execution of the next subtask in pipeline. If it does not match, then the controller agent initiates the handover mechanism as described in the serial mode. When there are multiple subtasks (for example, the subtasks 2 and 4 of the FIG. 6) in a single level of execution, the controller agent can partition and distribute the subtasks among its neighbouring available agents to execute the subtasks in parallel.

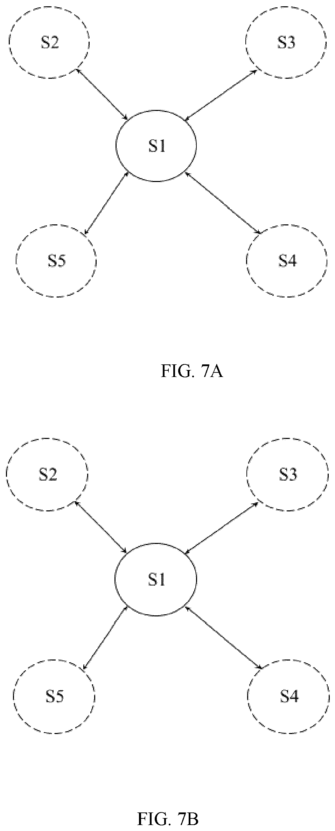

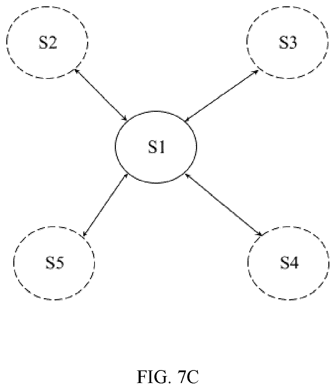

FIGS. 7A-7C illustrate exemplary task workflows in the direct acyclic graph (DAG) structure, with a task partitioning and a task distribution in a parallel mode, in accordance with some embodiments of the present disclosure. As shown in FIGS. 7A-7C, the controller agent sends a subtask sharing request along with the resource requirements to the agents within its 1 hop distance as shown in FIG. 7A. The agents with the available resources, reply with an accept message. The agents receiving the request and not capable of executing the subtask, floods the request message to the other agents in the next hop as shown in FIG. 7B. In this way the controller agent tries to identify one agent in each branch within *h* hop distance capable of executing part of the subtasks. In this case as shown in FIG. 7C, the selected agents for task distribution are S7, S12, S14 and S15.

During the whole process of task handover or task distribution, the controller agent and the selected agent or agents for the handover or the task distribution are remained connected. The decision whether to execute the concurrent subtasks serially by the agent locally or to distribute the subtasks among neighbouring agents and execute them in parallel depends on the reward gained locally. At a given timestamp, let the number of independent tasks is *p*. Let *Rᵢⱼ* to be the reward gained by executing task *i* in agent *j.* If the agent executes these *p* tasks locally through serial execution, there is no significant data exchange. Therefore, the communication latency, *L_{COMM}*(*T*_{*i*)} is 1 in this scenario. Hence, the reward gained locally, *Rₛₑᵣᵢₐₗ*, can be evaluated using the reward function as: $\begin{matrix}{R}_{serial} = {\sum }_{i = 1}^{p} {R}_{ij} \\ = {\sum }_{i = 1}^{p} \frac{{T}_{i}^{Q}}{{T}_{i}^{wt} {L}_{COMP} \left({T}_{\left.ij\right)}\right. {L}_{COMM} \left({T}_{\left.ij\right)}\right.} \\ = {\sum }_{i = 1}^{p} \frac{{T}_{i}^{Q}}{{T}_{i}^{wt} {L}_{COMP} \left({T}_{\left.ij\right)}\right.} since {L}_{COMM} \left({T}_{\left.ij\right)}\right. = 1\end{matrix}$

Further, consider there are n neighbouring agents. If the controller agent decides to distribute the *p* independent subtasks among these n neighbouring agents and if *p* > *n*, then each agent may execute more than 1 subtask. The problem of choosing the subset of given *p* subtasks that are to be executed by each agent such that the reward value gained can be maximized can be defined as a knapsack problem and can be solved using standard approach. The objective function can be defined as:
*maximize Rₚₐᵣₐₗₗₑₗ* Here, *Rₚₐᵣₐₗₗₑₗ* refers to the reward value gained through parallel execution using the reward function. The reward value gained by the controller agent by distributing the subtasks among *n* neighbouring agents is equivalent to the minimum reward gained by n agents. This is because the agent with the minimum reward gained represents the agent with maximum execution latency. So, the controller agent has to wait for this agent before it can move to the next step in the task workflow. Consider *Rⱼ* to be the reward gained locally by agent *j* while executing the offloaded subtasks. Therefore, *Rₚₐᵣₐₗₗₑₗ* can be evaluated using the following reward function: $\begin{matrix}{R}_{parallel} = {min}_{j = 1 to n} {R}_{j} \\ = {min}_{j = 1 to n} {\sum }_{i = 1}^{k} \frac{{T}_{i}^{Q}}{{T}_{i}^{wt} {L}_{COMP} \left({T}_{\left.ij\right)}\right. {L}_{COMM} \left({T}_{\left.ij\right)}\right.}\end{matrix}$

The communication delay *L_{COMM}*(*T*_{*ij*)} depends on the number of bits exchanged, the inter-agent bandwidth and the hop distance between the controller agent and the agent selected for task distribution. Each agent *A,* can be directly linked to at most *n* other agents. Therefore, if *A* selects an agent at hop distance *hᵢ* for handover of task *Tᵢ*, then the number of bits exchanged between initiation of task distribution to receiving the inferred output is: ${n}^{{h}_{i}} + {h}_{i} + {h}_{i} ∗ \frac{{d}_{i}}{n} + {h}_{i}$. Here, *n^{hᵢ}* is the number of bits transferred to send request messages for resource sharing.

The request message is a single bit. *hᵢ* is the number of bits transferred to deliver the 'accept' message from the agent available to the controller agent. Similarly, the 'accept' message is a single bit. ${h}_{i} ∗ \frac{{d}_{i}}{n}$ represents the number of bits transferred for task handover of task *Tᵢ* of data size *dᵢ* from controller agent to selected agent. *hᵢ* represents the number of bits transferred to convey the inferred output from the selected agent to controller agent. Hence the inferred output is also a single bit. The inter-agent bandwidth is considered to be a constant, *b*. Therefore, ${R}_{parallel} = {min}_{j = 1 to n} \left({\sum }_{i = 1}^{k} \frac{{T}_{i}^{Q}}{{T}_{i}^{wt} {L}_{COMP} \left({T}_{ij}\right)} \times \frac{b}{{n}^{{h}_{i}} + {h}_{i} \left(\frac{{d}_{i}}{n + 2}\right)}\right)$ The main aim or the objective of the present disclosure is to maximize the reward value. Therefore, the subtasks should be partitioned and distributed such that: ${R}_{parallel} > {R}_{serial}$

Below is an algorithm or a pseudocode for executing the tasks in the parallel mode using the task partitioning and the task distribution:

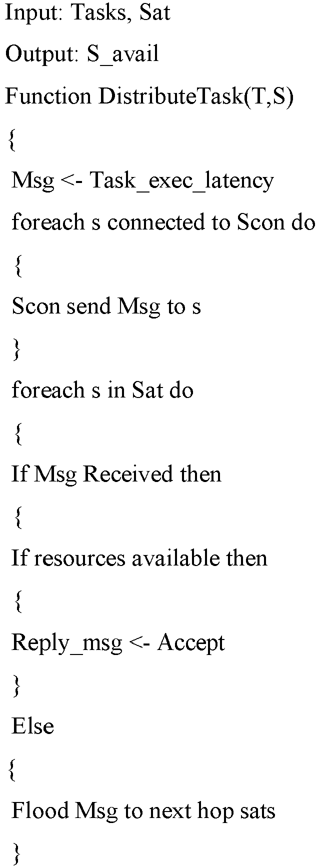

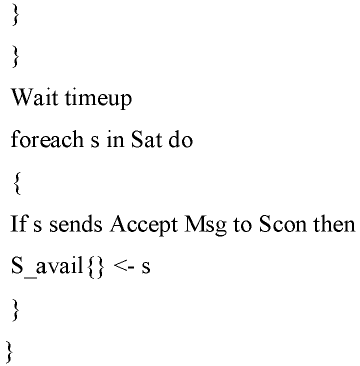

As shown in FIGS. 2A-2C, assigning the plurality of tasks in the static phase are further explained through steps 204a1 to 204a5. At step 204a1, first subtask among the plurality of subtasks present in each task is identified using the DAG structure. The first subtask is the earth observation data collection task. At step 204a2, one or more resources required for the first subtask of each task are received either by the user or using a system driven mechanism. At step 204a3, one or more qualifying satellites among the plurality of satellites, are identified for the first subtask of each task, based on the one or more resource capabilities of each satellite received at step 202 of the method 200, and the one or more resources required for the first subtask received at step 204a2.

At step 204a4, the value of the reward function (reward value) for each of the one or more qualifying satellites, is calculated, for executing the first subtask of each task. The value of the reward function (reward value) for each of the one or more qualifying satellites is calculated based on the set of operational attributes of an associated first subtask. In an embodiment, the reward function is defined in the optimization technique of the dynamic task scheduling algorithm of the present disclosure.

At step 204a5, a qualifying satellite among the one or more qualifying satellites having a maximum value of the reward function, is selected as the controller agent for each task of the plurality of tasks, if the predefined soft real-time constraint defined for each task is satisfied. As explained through steps 204a1 to 204a5, in the static phase, an initial controller agent is selected for the first subtask present in each task of the plurality of tasks. The task execution of each subtask and the task are not done at this static phase.

As shown in FIGS. 2A-2C, assigning the plurality of tasks in the dynamic phase are further explained through steps 204b1 to 204b5. At step 204b1, the first subtask of each task is executed, by the associated controller agent selected in the static phase. At step 204b2, a set of remaining subtasks for each task is identified and accumulated, after the execution of the first subtask and removing the first subtask from the associated task.

At step 204b3, one or more subtasks present in the set of remaining subtasks identified for each task at step 204b2, are sorted in a topological order, based on the one or more dependencies of each subtask. At step 204b4, a number of subtasks present in the in the set of remaining subtasks is calculated at a current level of execution of the one or more execution levels defined in the DAG. If there is a single subtask present in the set of remaining subtasks for each task after sorting in the topological order, at a current level of execution of one or more execution levels, then the handover mechanism is implemented at the serial mode.

In this serial mode, the single subtask is executed by the associated controller agent selected in the static phase, if one or more resource requirements of the single subtask matches with the one or more resource capabilities of the associated controller agent selected in the static phase and matches with the predefined soft real-time constraint of the single subtask. If the one or more resource requirements of the single subtask does not match with the one or more resource capabilities of the associated controller agent selected in the static phase and does not match with the predefined soft real-time constraint of the single subtask, then the single subtask is handed over to other satellites for execution using the handover mechanism.

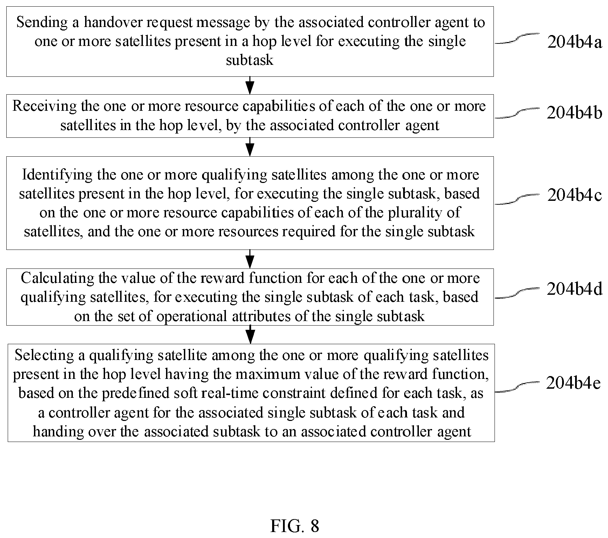

FIG. 8 is a flow diagram for handing over the single subtask to other satellites for execution using the handover mechanism in a serial mode, in accordance with some embodiments of the present disclosure. As shown in FIG. 8, handing over the single subtask to other satellites for execution using the handover mechanism is further explained through steps 204b4a to 204b4e. At step 204b4a, a handover request message is sent by the associated controller agent to one or more satellites present in a hop level for executing the single subtask. The hop level refers to the nearest hop level to the associated controller agent. If no satellites present in the first hop level, then the associated controller agent search for the second hop level and so on.

At step 204b4b, the one or more resource capabilities of each of the one or more satellites in the hop level, are received by the associated controller agent with the 'accept' message. At step 204b4c, the one or more qualifying satellites among the one or more satellites present in the hop level, are identified for executing the single subtask, based on the one or more resource capabilities of each satellite, and the one or more resources required for the single subtask.

At step 204b4d, the value of the reward function for each of the one or more qualifying satellites, identified at step 204b4c is calculated, for executing the single subtask of each task, based on the set of operational attributes of the single subtask. Finally at step 204b4e, a qualifying satellite among the one or more qualifying satellites present in the hop level having the maximum value of the reward function, is selected as a controller agent for the associated single subtask of each task, if the predefined soft real-time constraint defined for each task is satisfied, and the associated subtask is handed over to the associated controller agent.

In an embodiment, if the one or more qualifying satellites among the one or more satellites present in the hop level, are not identified for executing the single subtask, at step 204b4c, based on the one or more resource capabilities of each satellite, and the one or more resources required for the single subtask and does not match with the predefined soft real-time constraint of the single subtask, then such single subtask is handed over to the one or more satellites present in next hop level.

If there are multiple subtasks present in the set of remaining subtasks for each task after sorting in the topological order, at the current level of execution of one or more execution levels, then at step 204b5, the task partitioning and the task distribution is implemented at the parallel mode using the handover mechanism as explained at step 204b4. For this, if the one or more resource requirements of the multiple subtasks matches with the one or more resource capabilities of the associated controller agent selected in the static phase and matches with the predefined soft real-time constraint of each subtask, then the multiple subtasks present in the set of remaining subtasks are executed by the associated controller agent selected in the static phase.

If the one or more resource requirements of the multiple subtasks does not match with the one or more resource capabilities of the associated controller agent selected in the static phase and does not match with the predefined soft real-time constraint of each subtask, then the multiple subtasks present in the set of remaining subtasks for each task are handed over to other satellites for execution using the handover mechanism in the parallel mode.

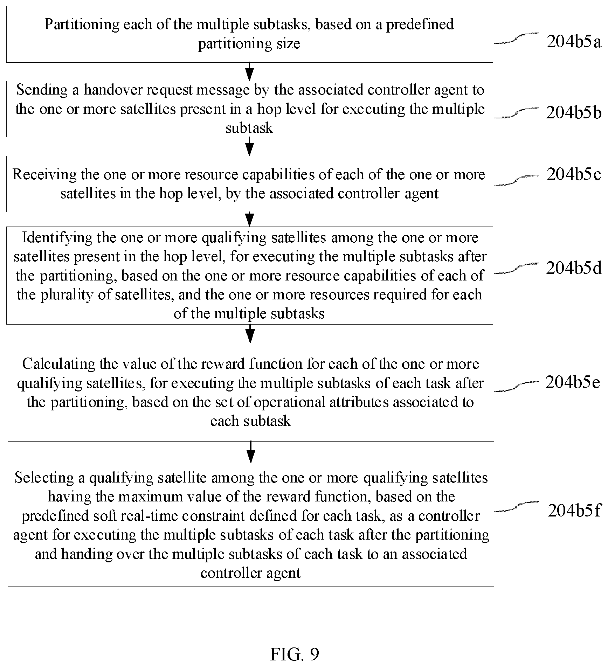

FIG. 9 is a flow diagram for handing over the multiple subtasks, to other satellites for execution in the parallel mode using the task partitioning and the task distribution, in accordance with some embodiments of the present disclosure. As shown in FIG. 9, handing over the multiple subtasks present in the set of remaining subtasks for each task, to other satellites for execution in the parallel mode using the task partitioning and the task distribution is further explained through steps 204b5a to 204b5f. At step 204b5a, each of the multiple subtasks, is partitioned based on a predefined partitioning size. In an embodiment, the predefined partitioning size is defined based on the resource capabilities of each satellite.

At step 204b5b, a handover request message is sent by the associated controller agent to the one or more satellites present in a hop level for executing the multiple subtasks. At step 204b5c, the one or more resource capabilities of each of the one or more satellites in the hop level having the 'accept' message, are received by the associated controller agent. At step 204b5d, one or more qualifying satellites among the one or more satellites present in the hop level, are identified for executing the multiple subtasks after the partitioning, based on the one or more resource capabilities of each satellite, the one or more resources required for each of the multiple subtasks, and matches with the predefined soft real-time constraint of each subtask.

At step 204b5e, the value of the reward function for each of the one or more qualifying satellites, is calculated, for executing the multiple subtasks of each task after the partitioning, based on the set of operational attributes associated to each subtask. Finally at step 204b5f, a qualifying satellite among the one or more qualifying satellites having the maximum value of the reward function, is selected as the controller agent for executing the multiple subtasks of each task, if the predefined soft real-time constraint defined for each task is satisfied, after the partitioning and handing over the multiple subtasks of each task to an associated controller agent.

If the one or more qualifying satellites among the one or more satellites present in the hop level, are not identified at step 204b5d for executing the multiple subtasks, based on the one or more resource capabilities of each satellite, and the one or more resources required for each of the multiple subtasks and does not match with the predefined soft real-time constraint of each subtask, then distributing the multiple subtasks of each task to the one or more satellites present in a next hop level. The process of selecting the controller agent both in the serial mode and the parallel mode is continued until each subtask present in each task is assigned to obtain the optimized distributed schedule.

At step 206 of the method 200, the one or more hardware processors 104 of the system 100 are configured to execute the plurality of tasks by the plurality of satellites present in the satellite cluster and the one or more ground stations, using the optimized distributed schedule obtained at step 204 of the method 200.

The method and systems of the present disclosure make use of the distributed scheduling algorithm for obtaining the optimized task schedule in two phases namely the offline phase or the static phase, and the on-line phase or the dynamic phase such that the overall makespan is minimized by utilizing the idle time of the satellite resources. The methods and systems of the present disclosure address the problem of the effective utilization of the idle computing resource available in the in-orbit satellite constellation.

The methods and systems of the present disclosure targeted to meet real-time constraints of data analysis tasks, and efficiently utilizes the constrained resources through workflow partitioning and task distribution. This reduces the idle time of the small satellite clusters and improves the overall response time. The distributed scheduling algorithm of the present disclosure further uses an optimization technique to reduce an overall make-span of the task workflow and thereby may be suitable for EO applications with soft-real time constraints. The two-phase structure of the distributed scheduling algorithm for earth observation data analytics in low earth orbit (LEO) satellites, utilizes the collective compute power in-orbit and the ground that may be suitable to meet the soft real time constraints of various EO applications.

### Experimental setup

An experimental setup was made by simulating the satellite constellation using the opensource TLE data available for conducting several experiments. The datasets used in our experiments are downloaded from Celestrak and PlanetLabs. The agents or resource capabilities such as the storage capacity and the processing capability are randomly generated within the ranges as mentioned in the state-of-the-art for small satellites. The tasks are assigned to the agents as per the method 200 of the present disclosure. The EO task workflow is assumed to comprise of collecting data from a defined target area, performing data analytics on the collected data using the compute power available in-orbit as well as on ground and finally communicating the inference to the nearest available ground station. The data analytics goes through a task workflow that is represented using a randomly generated directed acyclic graph (DAG).

Experiment - I: In the first experiment, the data collection delay from a single patch of area was studied. From the simulated constellation, a random satellite, S was chosen. The present sub-point, SP, of satellite S was derived. A circular area of radius R was considered with centre *SP* to be the target area A, to be observed. The radius, R, is varied between 100km-500km. The volume of data to be collected is varied between 25GB-100GB. The network bandwidth was considered to be 80Mbps.

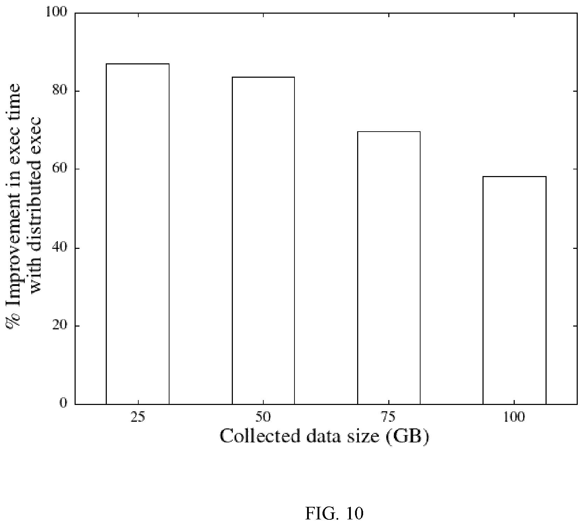

The first experiment is conducted in two scenarios. In the first scenario, a single satellite is assigned to collect the data. In the second scenario, a set of satellites, *SA*, was identified such that A is visible to *SA*. The target area A is tessellated into homogeneous blocks of equal areas. The set of satellites *SA* is assigned to collectively collect the data. FIG. 10 is a graph showing a percentage improvement in execution time using task distribution while collecting data from a single continuous target area, in accordance with some embodiments of the present disclosure. In FIG. 10, the data collection delay using a single satellite is compared to the data collection delay using multiple satellites from a single continuous target area. It was observed that with increase in data size, i.e., with increase in target area to be observed, the percentage improvement or reduction in execution time using multiple satellites as compared to using a single satellite decreases. This happens because with increase in data size, the scope of parallel execution of the data collection task increases and reaches a threshold. This happens because the payload increases but the number of resources remain the same. Hence the degree of parallel execution remains constant after reaching a threshold value.

Experiment - II: In this experiment, the data collection delay from discontinuous target area, i.e., multiple patches was studied. Here, 5 random satellites were chosen from the simulated satellite constellation. The present sub-point of each of these chosen 5 satellites was derived and considered these subpoints as the centre of the target areas to be observed. The radius of each target area to be observed is varied between 50km-150km. The network bandwidth was considered to be 80 Mbps. The total data to be collected is varied between 25GB to 100GB. The experiment is conducted in two scenarios. In the first scenario, the chosen 5 satellites are assigned the task to collect data. Each satellite assigned to collect data from each patch. In the second scenario, the set of satellites that can view the target areas to be observed was identified. The target areas are tessellated into homogeneous blocks of equal areas. The data collection task is distributed equally among this set of satellites.

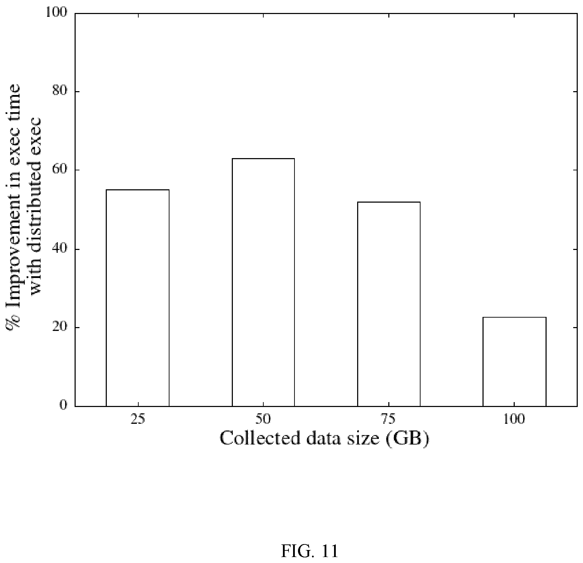

FIG. 11 is a graph showing a percentage improvement in execution time using task distribution while collecting data from discontinuous target area, in accordance with some embodiments of the present disclosure. In FIG. 11, it was observed that with increase in payload, the percentage improvement in execution time with task distribution increases to a threshold value and then decreases. In case of serial execution of task using single satellite, with increase in payload, the task execution time continually increases. In case of distributed task execution, with increase in payload, the scope of parallel task execution increases. However, the number of resources remains constant. Therefore, when the payload reaches a threshold, the system reaches a saturation point and there is no further scope of increasing parallelism.

Experiment - III: In this experiment, the intersatellite and satellite-ground station communication latency was studied. It can be defined as the visibility time required between satellites and between satellite and the ground station for data and message exchange during task execution. The satellite constellation of 256 satellites was simulated. The data size is varied between 25GB-100GB. The downlink and the intersatellite link speed is considered as 80Mbps and 73Mbps respectively according to the state-of-the-art. In the first scenario, a single satellite was chosen to collect the data and send the raw data to the ground station for analyses and inference, with the serial execution of the given task. In the second scenario, a single satellite was chosen which partitions and distributes the task among its neighbouring satellites. Each satellite analyses the collected data onboard and communicates the inferred result to the controller satellite.

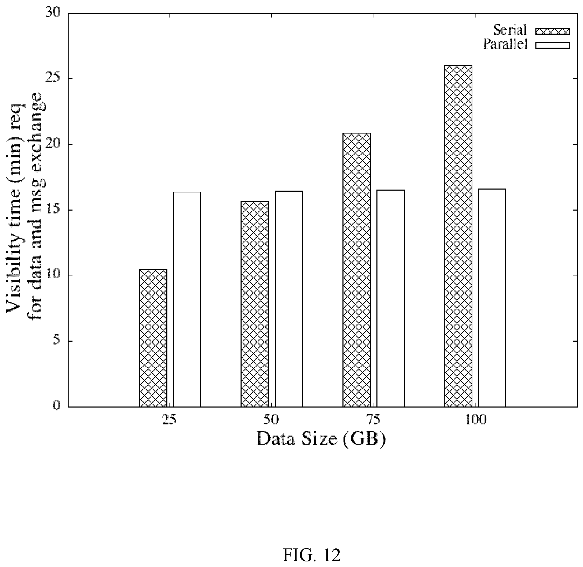

The controller satellite communicates the inferred result to the ground station. FIG. 12 is a graph showing a communication latency during the serial execution and the parallel execution of task, in accordance with some embodiments of the present disclosure. In case of serial execution, the visible time required between the satellite and the ground station increases linearly. On the contrary, in case of parallel execution the intersatellite and the satellite-ground station visible time required to exchange data and messages remains almost the same with increase in data size. This is because the collective compute power of the constellation and the satellites was efficiently utilized only to communicate the inferred result to the ground station via the controller satellite. Also from FIG. 12, the communication latency is higher for smaller size tasks in case of parallel execution, the benefit can be realized with the increase in task size.

Experiment - IV: In this experiment, the effect of increasing number of satellites on percentage improvement in execution time and percentage reduction in waiting time was observed using distributed task execution. Here, 3 different satellite constellations comprising of 159, 256 and 346 satellites were simulated. Each system performance was studied for two scenarios - when the data is collected from a single continuous area/ patch and when the data is collected from the discontinuous target area/ multiple patches. For both scenarios, the execution time and the waiting time of the tasks were compared when the task is executed serially to when the parallel tasks are distributed among neighbouring available satellites.

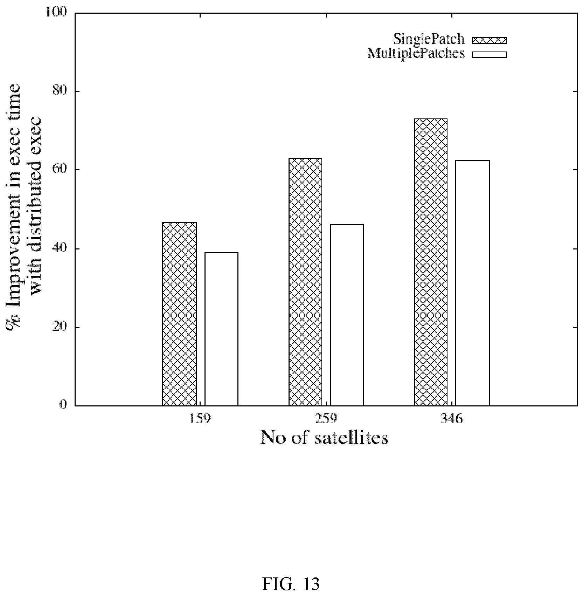

FIG. 13 is a graph showing a percentage improvement in the execution time using the parallel execution with increasing number of satellites, in accordance with some embodiments of the present disclosure. From FIG. 13, it was observed that with increase in the number of satellites the system performance improves both in the context of execution time and waiting time. This happens because with increase in the number of satellites, the scope of parallel execution of tasks increases. Hence, the overall system performance improves.

Experiment - V: In this experiment, the computational latency and the waiting time of individual tasks was studied. The number of tasks to be executed was considered as 4. Each of the tasks has three main subtasks- data collection, data analytics (computation) and data communication. Here the data computation workflow is represented using the DAG comprising of 10 nodes. The DAG is randomly generated. Each of the nodes represent a module of the computation task. The resource requirements to execute each module of the computation task is randomly generated. Here, the task execution time and the waiting time in task queue were compared when the task is serially executed and when the parallel tasks are distributed among available resources with required resource capabilities and executed parallelly. The waiting time can be defined as the time duration from when the task is ready for execution to the time when the task execution actually starts.

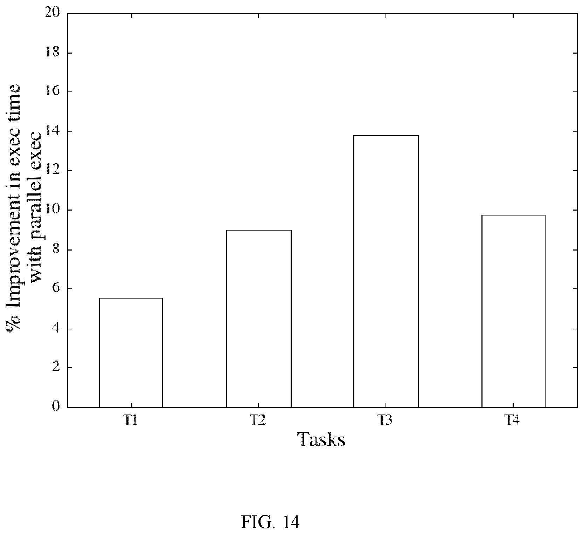

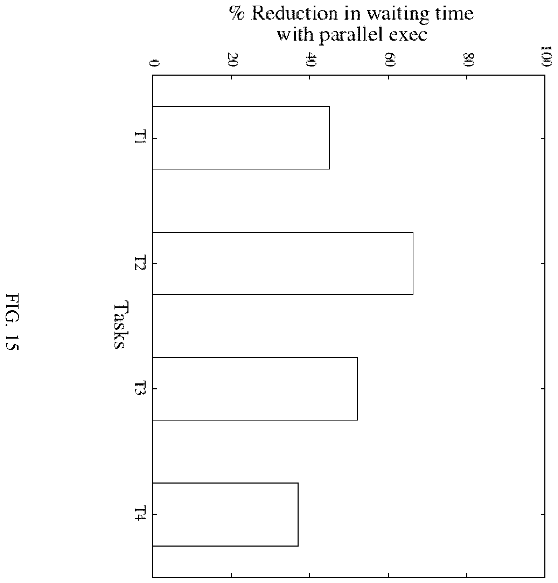

FIG. 14 is a graph showing a percentage improvement in the execution time with parallel execution of task, in accordance with some embodiments of the present disclosure. FIG. 15 is a graph showing a percentage reduction in the waiting time with parallel execution of task, in accordance with some embodiments of the present disclosure. From FIG. 14 and FIG. 15, it was observed that the average percentage improvement in the task execution time for each task is approximately and the average percentage reduction in the task waiting time for each task is approximately.

Experiment - VI: In this experiment, the effect of increasing the number of subtasks on the taskspan and the overall waiting time of the task were studied. The metrics are studied in two scenarios- when the task is executed serially and when the task is distributed and executed parallely. The number of tasks to be executed is considered as 4. Each task is represented using a random DAG. The number of subtasks in each task is varied between 10-30. The resource requirements of each subtask are randomly generated. With increase in the number of subtasks, the scope of parallel execution of the task increases.

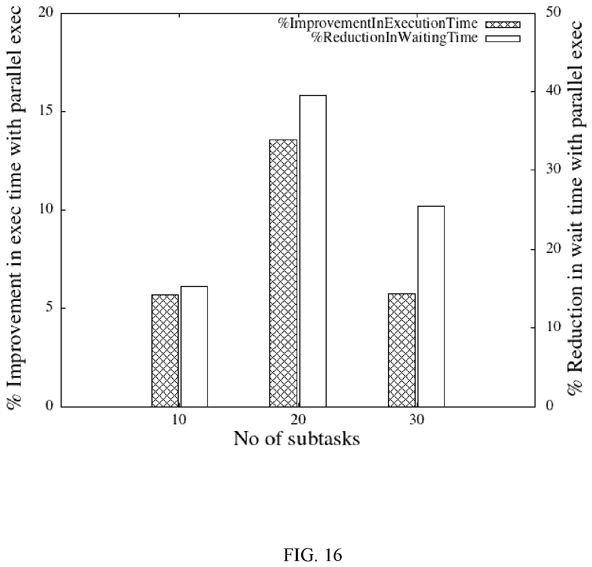

FIG. 16 is a graph showing a percentage improvement in the execution time and the percentage reduction in the waiting time with the parallel execution with increasing number of subtasks, in accordance with some embodiments of the present disclosure. From FIG. 16, the percentage improvement in execution time using parallel execution of the tasks increases. Similarly, the percentage reduction in waiting time of the tasks using parallel execution of the tasks also increases. However, the number of resources remain constant. Therefore, the scope of parallel execution of the tasks is limited. Hence, after the system payload reaches a threshold, there is no further scope of parallel execution. Therefore, the percentage improvement in execution time and the percentage reduction in waiting time of the task decreases.

Experiment - VII: In this experiment, the effect of increasing degree of parallelism of subtasks on the execution time and waiting time of the tasks were studied. Number of tasks considered as 4 tasks to be executed. Each task is represented using a random DAG. Each task comprises of multiple subtasks. The degree of parallelism is varied between 5-20. Here, the degree of parallelism denotes the max in-degree and max out-degree of the DAG.

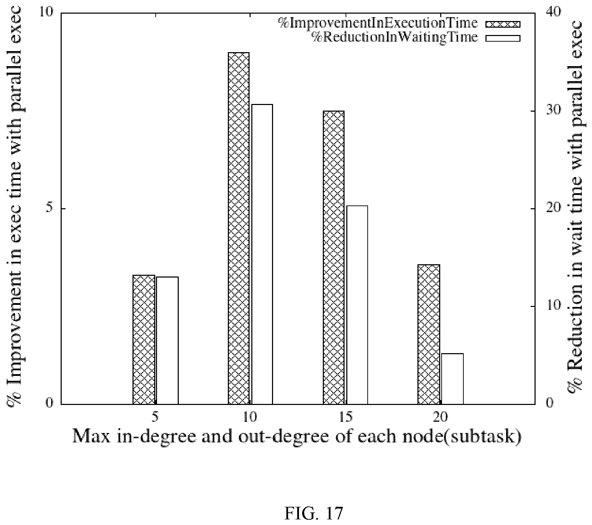

FIG. 17 is a graph showing a percentage improvement in execution time and percentage reduction in the waiting time with parallel execution with increasing degree of parallelism, in accordance with some embodiments of the present disclosure. From FIG. 17, it was observed that with increase in degree of parallelism, the percentage improvement in execution time and the percentage reduction in waiting time increases. However, the number of resources remain constant. Therefore, the scope of parallel execution is limited. In case of serial execution of the tasks, the execution time and the waiting time of the tasks increase linearly with increase in payload of the system. **In** case of parallel execution of tasks, initially, with increase in payload the execution time and the waiting time of the tasks remains constant. Once the payload reaches a threshold value, the execution time and the waiting time of the task increases linearly with increase in system payload. Therefore, the percentage improvement in execution time first increases with increase in system payload and then decreases with increase in system payload beyond the threshold value.

### EXAMPLE USE CASE

The method of the present disclosure with the distributed scheduling algorithm was demonstrated using a cloud detection use case. Multiple similar tasks are submitted to the system for execution. Each task can be described as cloud detection of a single continuous target area. Further this task can be subdivided into a serial workflow of 7 subtasks, namely, image collection, patchify, 3-class classification into cloudy, cloudless and partial cloudy frames, patchify partial cloudy frames, 2-class classification of partial cloudy frames into cloudy and cloudless frames, collate data and communicate to ground station. The resource requirement for the first subtask of each task is user-defined. The real-time constraints like the maximum processing delay of each task are user-defined. The resource capabilities are pre-defined. **In** the offline mode, for each task the resource requirement for the first subtask, i.e., image collection, is considered for controller agent selection. Once the controller agents are selected, the respective tasks are assigned to the selected agents. These agents are referred to as the controller agents.

In the online mode, the controller agents begin execution of the first subtask in the pipeline. The given subtask can be partitioned and executed parallelly. In this workflow, the 3-class classification of the individual frames and 2-class classification of the partial cloudy frames are partitioned and distributed to neighbouring agents for parallel execution. The task partitioning and the task distribution was implemented as disclosed using the parallel mode. As described, once the distributed tasks are completed successfully by the agents, the data is collated and communicated back to the controller agent. While executing the subtask if the agent encounters any sudden interruption, then the agent initiates task handover as described using the task handover mechanism. The interruption may be due to sudden storage overflow, ground point no longer in the field of view of the agent, etc.

Experimental Setup: the orbital parameters of the satellites were loaded from the TLE files published in the Celestrak. It has data of 159 satellites. The Skyfield tool was used to generate the track data of the satellites. The orbital track data of each satellite was generated for every 2mins for a period of 200mins. From the orbital track data, the ground track data was manipulated. From the derived ground track data, a subset of the points was randomly chosen and marked it as the ground points to be observed and 1 point as the ground station. An area of radius 500 m around each ground point to be the target area to be observed. The Skyfield tool was used to compute the visible time window of each satellite with respect to the target area to be observed, other satellites and the ground station. The downlink, uplink and intersatellite communication bandwidth is taken from the state of the art. The storage capacity and the computational capability of the satellites are also taken from the state of the art.

Each continuous target area to be observed represent a single task. The task comprises of capturing the image of the given target area and classification of the image into cloudy and cloudless images. The image size to be captured was randomly generated which lies between 1KB to 10KB. The time taken to patchify, 3-class classification of individual frames into cloudy, partial cloudy and cloudless frames and 2-class classification of partial cloudy frames into cloudy and cloudless frames are derived. The resources required to execute each of the subtask are randomly generated within the bounds as specified in.

All the experiments are performed under 2 scenarios. In the first scenario, there is no inter-satellite communication or task distribution or task handover. The complete workflow of the task- data collection, computation and communication are performed on-board by a single satellite, i.e., the controller satellite. In the second scenario, the controller agent can distribute parallel tasks as well as handover the task in case of interruptions. Given the two scenarios, various performance metrics like percentage improvement in execution time and percentage of time the satellites remain idle were studied. The effect of increasing load in terms of increasing task size and increasing number of tasks on the above-mentioned performance metrics were also studied. The results are derived as an average of 10 simulations.

Experimental Results: In the first experiment, the improvement in idle resource utilization and the percentage improvement in execution time of each task with task distribution and handover are compared. In this experiment, 50 tasks are submitted to the constellation of 159 satellites for execution. It is observed that the average percentage of idle time using a single satellite is 62.04% and using multiple satellites with task distribution and task handover is 7.28%. Therefore, the resource utilization significantly improves using task distribution and task handover. It was also observed that the average percentage improvement in execution time of each task with task distribution and handover is approximately 6%. Task distribution has enabled parallel execution of concurrent tasks using neighbouring idle agents. Also, task handover has reduced the task idle time that can be caused due to task interruption. The overhead incurred due to task distribution and handover is the latency in message and data exchange. However, it is observed that despite the communication overhead, the overall task execution time is significantly improved with task distribution and handover.

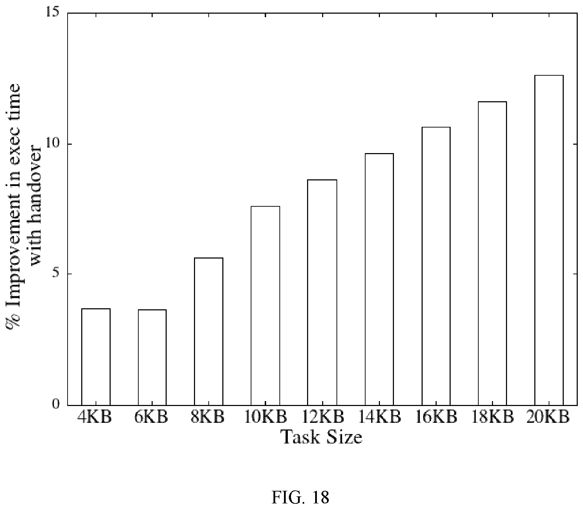

In the second experiment, the percentage improvement in execution time with varying task size was studied. FIG. 18 is a graph showing a percentage improvement in execution time during cloud detection with varying task size using task handover and task distribution, in accordance with some embodiments of the present disclosure. The task size is varied between 4KB to 20KB. The number of tasks is considered as 50. These tasks are assigned to a constellation of 159 satellites. When the task size is small, the improvement in task execution time with task distribution and task handover is less significant. This is because the time taken to execute a smaller size task is less than executing a larger size task. Hence, the probability of task interruption while executing a smaller size task is less. Therefore, task handover is rarely required for execution of these tasks. Also, task distribution for smaller tasks can be done in a much smaller scale than larger tasks. Therefore, the improvement in execution time gained by task distribution for smaller tasks is less significant than larger tasks. On the contrary, for larger task size, significant improvement in execution time with task handover and task distribution.

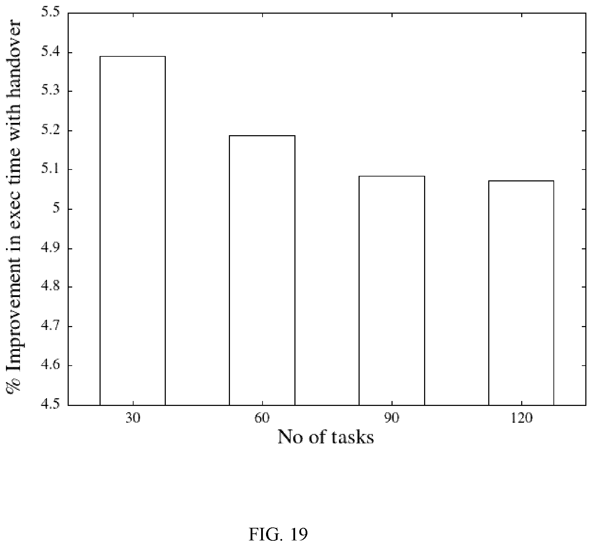

It was also observed that percentage improvement in the execution time increases with increase in the task size. However, after a certain task size, it reaches a saturation point as the total computing and processing capability of the constellation reaches a bottleneck. In the third experiment, the percentage improvement in execution time with varying the number of tasks was studied. FIG. 19 is a graph showing a percentage improvement in execution time during cloud detection with varying number of tasks using task handover and task distribution, in accordance with some embodiments of the present disclosure. The number of tasks is varied between 30 to 120. The tasks are assigned to a constellation of 159 satellites. It was observed that the percentage improvement in execution time with task handover and task distribution decreases with the increase in the overall load, i.e., the number of tasks submitted to the system. This is because with the increase in the number of tasks submitted to the system for execution, the scope of task distribution and task handover decreases as the resources remain the same. Therefore, the waiting time of the tasks in the task queue increases. Hence, increasing the overall task execution time.

The embodiments of present disclosure herein address unresolved problem of distributed task scheduling in a satellite cluster for earth observation data analytics. The methods and systems of the present disclosure address the problem of the effective utilization of the idle computing resource available in the in-orbit satellite constellation and managing distributed execution of data analytic workflows. The experimental results also proved that the idle time of the computing resource available in the in-orbit satellite constellation was improved drastically with the combination of proposed handover mechanism, the task partitioning, and the task distribution.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (200) of distributed task scheduling in a satellite cluster for earth observation data analytics, comprising the steps of:
receiving, via one or more hardware processors, a plurality of tasks to be executed by a plurality of satellites present in the satellite cluster and one or more ground stations connected to the one or more satellites, a predefined soft real-time constraint defined for each task of the plurality of tasks, one or more resource requirements required for each task, and one or more resource capabilities of each of the one or more satellites and each of the one or more ground stations, wherein the plurality of satellites in the satellite cluster constellate at hop levels, wherein the predefined soft real-time constraint is a maximum processing delay defined as a completion time within which each task of the plurality of tasks is to be completed, wherein each task comprises a plurality of subtasks and one or more dependencies of each subtask on remaining subtasks of the plurality of subtasks, wherein each task is defined in a directed acyclic graph, DAG, structure with a predefined task workflow for the execution based on the dependencies (202);
assigning, via the one or more hardware processors, the plurality of tasks to the plurality of satellites present in the satellite cluster and the one or more ground stations, in a static phase and a dynamic phase in a sequence, using an optimization technique, to obtain an optimized distributed schedule of the plurality of tasks, wherein the scheduling of the tasks in the dynamic phase is performed, by a scheduler, which considers changing inter-satellite and satellite-to-ground station connectivity, changing resource status and task status, wherein the static phase and the dynamic phase of distributed scheduling algorithm for the earth observation data analytics in a low earth orbit, LEO, satellites, utilizes collective compute power in-orbit and ground that is required to meet the predefined soft real-time constraint of earth observation, EO, applications (204),
wherein assigning the plurality of tasks in the static phase comprising:
(i) identifying a first subtask among the plurality of subtasks for each task, wherein the first subtask is an earth observation data collection task (204a1);
(ii) receiving one or more resources required for the first subtask of each task (204a2);
(iii) identifying one or more qualifying satellites among the plurality of satellites, for the first subtask of each task, based on the one or more resource capabilities of each satellite, and the one or more resources required for the first subtask (204a3);
(iv) calculating a value of a reward function for each of the one or more qualifying satellites, for executing the first subtask of each task, based on a set of operational attributes of an associated first subtask, wherein the reward function is defined in the optimization technique (204a4); and
(v) selecting a qualifying satellite among the one or more qualifying satellites having a maximum value of the reward function, based on the predefined soft real-time constraint defined for each task, as a controller agent for each task of the plurality of tasks (204a5); and
wherein in the dynamic phase, the tasks are executed in two modes including a serial mode and a parallel mode, wherein in the parallel mode of execution, the task in the DAG structure is topologically sorted, and the subtasks are arranged into levels of execution, wherein the controller agent is configured to identify a controller agent in each branch within h hop distance for executing part of the subtasks, wherein scheduling the plurality of tasks in the dynamic phase comprising:
(i) executing the first subtask of each task of the plurality of tasks, by an associated controller agent selected in the static phase (204b1);
(ii) identifying a set of remaining subtasks for each task of the plurality of tasks, after the execution of the first subtask and removing the first subtask from an associated task (204b2);
(iii) sorting one or more subtasks present in the set of remaining subtasks for each task of the plurality of tasks, in a topological order, based on the one or more dependencies of each subtask (204b3);
(iv) if there is a single subtask present in the set of remaining subtasks for each task after sorting in the topological order, at a current level of execution of one or more execution levels, then:
(a) executing the single subtask by the associated controller agent selected in the static phase, if one or more resource requirements of the single subtask matches with the one or more resource capabilities of the associated controller agent selected in the static phase and matches with the predefined soft real-time constraint; and
(b) handing over the single subtask to other satellites for execution using a handover mechanism, if the one or more resource requirements of the single subtask does not match with the one or more resource capabilities of the associated controller agent selected in the static phase and does not match with the predefined soft real-time constraint (204b4), wherein the step of handling over the single sub task includes:
i. calculating the value of the reward function for each of the one or more qualifying satellites, for executing the single subtask of each task, based on the set of operational attributes of the single subtask (204b4d), wherein a reward gained locally, *Rₛₑᵣᵢₐₗ*, is evaluated using the reward function as $\begin{matrix}{R}_{serial} = {\sum }_{i = 1}^{p} {R}_{ij} \\ = {\sum }_{i = 1}^{p} \frac{{T}_{i}^{Q}}{{T}_{i}^{wt} {L}_{COMP} \left({T}_{ij}\right) {L}_{COMM} \left({T}_{ij}\right)} \\ = {\sum }_{i = 1}^{p} \frac{{T}_{i}^{Q}}{{T}_{i}^{wt} {L}_{COMP} \left({T}_{ij}\right)}\end{matrix}$ where *L_{COMM}*(*T*_{*ij*)} *=* 1, where Rᵢⱼ is reward gained by the controller agent j for executing subtask i, p is number of independent subtasks, ${T}_{i}^{wt}$ is a waiting time of the subtask, *L*_{COMP}(*Tᵢⱼ*) is a computational latency, *L*_{COMM}(*Tᵢⱼ*) is a communication latency, ${T}_{i}^{Q}$ is a dimensionless task priority; and
ii. selecting a qualifying satellite among the one or more qualifying satellites present in the hop level having the maximum value of the reward function, based on the predefined soft real-time constraint defined for each task, as a controller agent for the associated single subtask of each task and handing over the associated subtask to an associated controller agent, wherein the hop level refers to a nearest hop level to the associated controller agent (204b4e);
(v) if there are multiple subtasks present in the set of remaining subtasks for each task after sorting in the topological order, at the current level of execution of one or more execution levels, then:
(a) executing the multiple subtasks present in the set of remaining subtasks for each task after sorting in the topological order, at the current level of execution, by the associated controller agent selected in the static phase, if one or more resource requirements of the multiple subtasks matches with the one or more resource capabilities of the associated controller agent selected in the static phase and matches with the predefined soft real-time constraint; and
(b) handing over the multiple subtasks present in the set of remaining subtasks for each task after sorting in the topological order, at the current level of execution to other satellites for execution using a handover mechanism, if the one or more resource requirements of the multiple subtasks does not match with the one or more resource capabilities of the associated controller agent selected in the static phase and does not match with the predefined soft real-time constraint (204b5); and
executing, via the one or more hardware processors, the plurality of tasks by the plurality of satellites present in the satellite cluster and the one or more ground stations, using the optimized distributed schedule (206).

2. The method as claimed in claim 1, wherein each subtask of the plurality of subtasks present in each task, is associated with a set of operational attributes comprising (i) the waiting time, (ii) the computational latency, (iii) the communication latency, and (iv) a task priority.

3. The method as claimed in claim 1, wherein the plurality of subtasks present in each task are executed at one or more execution levels, based on the one or more dependencies of each subtask on remaining subtasks of the plurality of subtasks.

4. The method as claimed in claim 1, wherein the plurality of subtasks present in each task are one or more of: (i) the earth observation data collection task, (ii) one or more earth observation data analytics tasks, and (iii) one or more earth observation data communication tasks, and wherein each of the one or more earth observation data collection tasks is to gather an earth observation data by each of the one or more satellites for a predefined region on earth, each of the one or more earth observation data analytics tasks is to analyze the earth observation data by the plurality of satellites or the one or more ground stations to determine one or more inferences of an associated earth observation data collection task, and each of the one or more earth observation data communication tasks is one of (i) a data exchange subtask and (ii) a command exchange subtask, between the plurality of satellites and the one or more ground stations.

5. The method as claimed in claim 1, wherein the step of calculating the value of the reward function for each of the one or more qualifying satellites is preceded by:
sending a handover request message by the associated controller agent to one or more satellites present in the hop level for executing the single subtask (204b4a);
receiving the one or more resource capabilities of each of the one or more satellites in the hop level, by the associated controller agent (204b4b); and
identifying the one or more qualifying satellites among the one or more satellites present in the hop level, for executing the single subtask, based on the one or more resource capabilities of each of the plurality of satellites, and the one or more resources required for the single subtask (204b4c).

6. The method as claimed in claim 1, wherein if the one or more qualifying satellites among the one or more satellites present in the hop level, are not identified for executing the single subtask, based on the one or more resource capabilities of each of the plurality of satellites, and the one or more resources required for the single subtask and does not match with the predefined soft real-time constraint, then the single subtask is handed over to the one or more satellites present in next hop level.

7. The method as claimed in claim 1, wherein handing over the multiple subtasks present in the set of remaining subtasks for each task after sorting in the topological order, at the current level of execution to other satellites for execution using the handover mechanism, if the one or more resource requirements of the multiple subtasks does not match with the one or more resource capabilities of the associated controller agent selected in the static phase and does not match with the predefined soft real-time constraint, comprises:
partitioning each of the multiple subtasks, based on a predefined partitioning size (204b5a);
sending a handover request message by the associated controller agent to the one or more satellites present in the hop level for executing the multiple subtask (204b5b);
receiving the one or more resource capabilities of each of the one or more satellites in the hop level, by the associated controller agent (204b5c);
identifying the one or more qualifying satellites among the one or more satellites present in the hop level, for executing the multiple subtasks after the partitioning, based on the one or more resource capabilities of each satellite, and the one or more resources required for each of the multiple subtasks (204b5d);
calculating the value of the reward function for each of the one or more qualifying satellites, for executing the multiple subtasks of each task after the partitioning, based on the set of operational attributes associated to each subtask (204b5e); and
selecting a qualifying satellite among the one or more qualifying satellites having the maximum value of the reward function, based on the predefined soft real-time constraint defined for each task, as a controller agent for executing the multiple subtasks of each task after the partitioning and handing over the multiple subtasks of each task to an associated controller agent, and
if the one or more qualifying satellites among the one or more satellites present in the hop level, are not identified for executing the multiple subtasks, based on the one or more resource capabilities of each satellite, and the one or more resources required for each of the multiple subtasks and does not match with the predefined soft real-time constraint, then distributing the multiple subtasks of each task to the one or more satellites present in a next hop level (204b5f).

8. A system (100) for distributed task scheduling in a satellite cluster for earth observation data analytics, comprising:
a memory (102) storing instructions;
one or more input/output (I/O) interfaces (106); and
one or more hardware processors (104) coupled to the memory (102) via the one or more I/O interfaces (106), wherein the one or more hardware processors (104) are configured by the instructions to:
receive a plurality of tasks to be executed by a plurality of satellites present in the satellite cluster and one or more ground stations connected to the one or more satellites, a predefined soft real-time constraint defined for each task of the plurality of tasks, one or more resource requirements required for each task, and one or more resource capabilities of each of the one or more satellites and each of the one or more ground stations, wherein the plurality of satellites in the satellite cluster constellate at hop levels, wherein the predefined soft real-time constraint is a maximum processing delay defined as a completion time within which each task of the plurality of tasks is to be completed, wherein each task comprises a plurality of subtasks and one or more dependencies of each subtask on remaining subtasks of the plurality of subtasks, wherein each task is defined in a directed acyclic graph, DAG, structure with a predefined task workflow for the execution based on the dependencies;
assign the plurality of tasks to the plurality of satellites present in the satellite cluster and the one or more ground stations, in a static phase and a dynamic phase in a sequence, using an optimization technique, to obtain an optimized distributed schedule of the plurality of tasks, wherein the scheduling of the tasks in the dynamic phase is performed, by a scheduler, which considers changing inter-satellite and satellite-to-ground station connectivity, changing resource status and task status, wherein the static phase and the dynamic phase of distributed scheduling algorithm for the earth observation data analytics in a low earth orbit, LEO, satellites, utilizes collective compute power in-orbit and ground that is required to meet the predefined soft real-time constraint of earth observation, EO, applications,
wherein assigning the plurality of tasks in the static phase comprising:
(i) identifying a first subtask among the plurality of subtasks for each task, wherein the first subtask is an earth observation data collection task;
(ii) receiving one or more resources required for the first subtask of each task;
(iii) identifying one or more qualifying satellites among the plurality of satellites, for the first subtask of each task, based on the one or more resource capabilities of each satellite, and the one or more resources required for the first subtask;
(iv) calculating a value of a reward function for each of the one or more qualifying satellites, for executing the first subtask of each task, based on a set of operational attributes of an associated first subtask, wherein the reward function is defined in the optimization technique; and
(v) selecting a qualifying satellite among the one or more qualifying satellites having a maximum value of the reward function, based on the predefined soft real-time constraint defined for each task, as a controller agent for each task of the plurality of tasks; and
wherein in the dynamic phase, the tasks are executed in two modes including a serial mode and a parallel mode, wherein in the parallel mode of execution, the task in the DAG structure is topologically sorted, and the subtasks are arranged into levels of execution, wherein the controller agent is configured to identify a controller agent in each branch within *h* hop distance for executing part of the subtasks, wherein scheduling the plurality of tasks in the dynamic phase comprising:
(i) executing the first subtask of each task of the plurality of tasks, by an associated controller agent selected in the static phase;
(ii) identifying a set of remaining subtasks for each task of the plurality of tasks, after the execution of the first subtask and removing the first subtask from an associated task;
(iii) sorting one or more subtasks present in the set of remaining subtasks for each task of the plurality of tasks, in a topological order, based on the one or more dependencies of each subtask;
(iv) if there is a single subtask present in the set of remaining subtasks for each task after sorting in the topological order, at a current level of execution of one or more execution levels, then:
(a) executing the single subtask by the associated controller agent selected in the static phase, if one or more resource requirements of the single subtask matches with the one or more resource capabilities of the associated controller agent selected in the static phase and matches with the predefined soft real-time constraint; and
(b) handing over the single subtask to other satellites for execution using a handover mechanism, if the one or more resource requirements of the single subtask does not match with the one or more resource capabilities of the associated controller agent selected in the static phase and does not match with the predefined soft real-time constraint, wherein the step of handling over the single sub task includes:
i. calculating the value of the reward function for each of the one or more qualifying satellites, for executing the single subtask of each task, based on the set of operational attributes of the single subtask, wherein a reward gained locally, *Rₛₑᵣᵢₐₗ,* is evaluated using the reward function as $\begin{matrix}{R}_{serial} = {\sum }_{i = 1}^{p} {R}_{ij} \\ = {\sum }_{i = 1}^{p} \frac{{T}_{i}^{Q}}{{T}_{i}^{wt} {L}_{COMP} \left({T}_{ij}\right) {L}_{COMM} \left({T}_{ij}\right)} \\ = {\sum }_{i = 1}^{p} \frac{{T}_{i}^{Q}}{{T}_{i}^{wt} {L}_{COMP} \left({T}_{ij}\right)}\end{matrix}$ where *L_{COMM}*(*T*_{*ij*)} = 1, where Rᵢⱼ is reward gained by the controller agent j for executing subtask i, p is number of independent subtasks, ${T}_{i}^{wt}$ is a waiting time of the subtask, *L*_{COMP}(*Tᵢⱼ*) is a computational latency, *L*_{COMM}(*Tᵢⱼ*) is a communication latency, ${T}_{i}^{Q}$ is a dimensionless task priority; and
ii. selecting a qualifying satellite among the one or more qualifying satellites present in the hop level having the maximum value of the reward function, based on the predefined soft real-time constraint defined for each task, as a controller agent for the associated single subtask of each task and handing over the associated subtask to an associated controller agent, wherein the hop level refers to a nearest hop level to the associated controller agent;
(v) if there are multiple subtasks present in the set of remaining subtasks for each task after sorting in the topological order, at the current level of execution of one or more execution levels, then:
(a) executing the multiple subtasks present in the set of remaining subtasks for each task after sorting in the topological order, at the current level of execution, by the associated controller agent selected in the static phase, if one or more resource requirements of the multiple subtasks matches with the one or more resource capabilities of the associated controller agent selected in the static phase and matches with the predefined soft real-time constraint; and
(b) handing over the multiple subtasks present in the set of remaining subtasks for each task after sorting in the topological order, at the current level of execution to other satellites for execution using a handover mechanism, if the one or more resource requirements of the multiple subtasks does not match with the one or more resource capabilities of the associated controller agent selected in the static phase and does not match with the predefined soft real-time constraint; and
execute the plurality of tasks by the plurality of satellites present in the satellite cluster and the one or more ground stations, using the optimized distributed schedule.

9. The system as claimed in claim 8, wherein each subtask of the plurality of subtasks present in each task, is associated with a set of operational attributes comprising (i) the waiting time, (ii) the computational latency, (iii) the communication latency, and (iv) a task priority.

10. The system as claimed in claim 8, wherein the plurality of subtasks present in each task are executed at one or more execution levels, based on the one or more dependencies of each subtask on remaining subtasks of the plurality of subtasks.

11. The system as claimed in claim 8, wherein the plurality of subtasks present in each task are one or more of: (i) the earth observation data collection task, (ii) one or more earth observation data analytics tasks, and (iii) one or more earth observation data communication tasks, and wherein each of the one or more earth observation data collection tasks is to gather an earth observation data by each of the one or more satellites for a predefined region on the earth, each of the one or more earth observation data analytics tasks is to analyze the earth observation data by the plurality of satellites or the one or more ground stations to determine one or more inferences of an associated earth observation data collection task, and each of the one or more earth observation data communication tasks is one of (i) a data exchange subtask and (ii) a command exchange subtask, between the plurality of satellites and the one or more ground stations.

12. The system as claimed in claim 8, wherein the step of calculating the value of the reward function for each of the one or more qualifying satellites is preceded by:
sending a handover request message by the associated controller agent to one or more satellites present in the hop level for executing the single subtask;
receiving the one or more resource capabilities of each of the one or more satellites in the hop level, by the associated controller agent; and
identifying the one or more qualifying satellites among the one or more satellites present in the hop level, for executing the single subtask, based on the one or more resource capabilities of each satellite, and the one or more resources required for the single subtask.

13. The system as claimed in claim 8, wherein the one or more hardware processors (104) are configured to hand over the single subtask to the one or more satellites present in next hop level, if the one or more qualifying satellites among the one or more satellites present in the hop level, are not identified for executing the single subtask, based on the one or more resource capabilities of each satellite, and the one or more resources required for the single subtask and does not match with the predefined soft real-time constraint.

14. The system as claimed in claim 8, wherein the one or more hardware processors (104) are configured to hand over the multiple subtasks present in the set of remaining subtasks for each task after sorting in the topological order, at the current level of execution to other satellites for execution using the handover mechanism, if the one or more resource requirements of the multiple subtasks does not match with the one or more resource capabilities of the associated controller agent selected in the static phase and does not match with the predefined soft real-time constraint, by:
partitioning each of the multiple subtasks, based on a predefined partitioning size;
sending a handover request message by the associated controller agent to the one or more satellites present in the hop level for executing the multiple subtask;
receiving the one or more resource capabilities of each of the one or more satellites in the hop level, by the associated controller agent;
identifying the one or more qualifying satellites among the one or more satellites present in the hop level, for executing the multiple subtasks after the partitioning, based on the one or more resource capabilities of each of the plurality of satellites, and the one or more resources required for each of the multiple subtasks;
calculating the value of the reward function for each of the one or more qualifying satellites, for executing the multiple subtasks of each task after the partitioning, based on the set of operational attributes associated to each subtask;
selecting a qualifying satellite among the one or more qualifying satellites having the maximum value of the reward function, based on the predefined soft real-time constraint defined for each task, as a controller agent for executing the multiple subtasks of each task after the partitioning and handing over the multiple subtasks of each task to an associated controller agent; and
distributing the multiple subtasks of each task to the one or more satellites present in a next hop level, if the one or more qualifying satellites among the one or more satellites present in the hop level, are not identified for executing the multiple subtasks, based on the one or more resource capabilities of each of the plurality of satellites, and the one or more resources required for each of the multiple subtasks and does not match with the predefined soft real-time constraint.

15. One or more non-transitory machine-readable information storage mediums comprising one or more instructions which when executed by one or more hardware processors cause:
receiving a plurality of tasks to be executed by a plurality of satellites present in a satellite cluster and one or more ground stations connected to the one or more satellites, a predefined soft real-time constraint defined for each task of the plurality of tasks, one or more resource requirements required for each task, and one or more resource capabilities of each of the one or more satellites and each of the one or more ground stations, wherein the plurality of satellites in the satellite cluster constellate at hop levels, wherein the predefined soft real-time constraint is a maximum processing delay defined as a completion time within which each task of the plurality of tasks is to be completed, wherein each task comprises a plurality of subtasks and one or more dependencies of each subtask on remaining subtasks of the plurality of subtasks, wherein each task is defined in a directed acyclic graph, DAG, structure with a predefined task workflow for the execution based on the dependencies;
assigning the plurality of tasks to the plurality of satellites present in the satellite cluster and the one or more ground stations, in a static phase and a dynamic phase in a sequence, using an optimization technique, to obtain an optimized distributed schedule of the plurality of tasks, wherein the scheduling of the tasks in the dynamic phase is performed, by a scheduler, which considers changing inter-satellite and satellite-to-ground station connectivity, changing resource status and task status, wherein the static phase and the dynamic phase of distributed scheduling algorithm for the earth observation data analytics in a low earth orbit, LEO, satellites, utilizes collective compute power in-orbit and ground that is required to meet the predefined soft real-time constraint of earth observation, EO, applications,
wherein assigning the plurality of tasks in the static phase comprising:
(i) identifying a first subtask among the plurality of subtasks for each task, wherein the first subtask is an earth observation data collection task;
(ii) receiving one or more resources required for the first subtask of each task;
(iii) identifying one or more qualifying satellites among the plurality of satellites, for the first subtask of each task, based on the one or more resource capabilities of each satellite, and the one or more resources required for the first subtask;
(iv) calculating a value of a reward function for each of the one or more qualifying satellites, for executing the first subtask of each task, based on a set of operational attributes of an associated first subtask, wherein the reward function is defined in the optimization technique; and
(v) selecting a qualifying satellite among the one or more qualifying satellites having a maximum value of the reward function, based on the predefined soft real-time constraint defined for each task, as a controller agent for each task of the plurality of tasks; and
wherein in the dynamic phase, the tasks are executed in two modes including a serial mode and a parallel mode, wherein in the parallel mode of execution, the task in the DAG structure is topologically sorted, and the subtasks are arranged into levels of execution, wherein the controller agent is configured to identify a controller agent in each branch within *h* hop distance for executing part of the subtasks, wherein scheduling the plurality of tasks in the dynamic phase comprising:
(i) executing the first subtask of each task of the plurality of tasks, by an associated controller agent selected in the static phase;
(ii) identifying a set of remaining subtasks for each task of the plurality of tasks, after the execution of the first subtask and removing the first subtask from an associated task;
(iii) sorting one or more subtasks present in the set of remaining subtasks for each task of the plurality of tasks, in a topological order, based on the one or more dependencies of each subtask;
(iv) if there is a single subtask present in the set of remaining subtasks for each task after sorting in the topological order, at a current level of execution of one or more execution levels, then:
(a) executing the single subtask by the associated controller agent selected in the static phase, if one or more resource requirements of the single subtask matches with the one or more resource capabilities of the associated controller agent selected in the static phase and matches with the predefined soft real-time constraint; and
(b) handing over the single subtask to other satellites for execution using a handover mechanism, if the one or more resource requirements of the single subtask does not match with the one or more resource capabilities of the associated controller agent selected in the static phase and does not match with the predefined soft real-time constraint, wherein the step of handling over the single sub task includes:
i. calculating the value of the reward function for each of the one or more qualifying satellites, for executing the single subtask of each task, based on the set of operational attributes of the single subtask, wherein a reward gained locally, *Rₛₑᵣᵢₐₗ*, is evaluated using the reward function as $\begin{matrix}{R}_{serial} = {\sum }_{i = 1}^{p} {R}_{ij} \\ = {\sum }_{i = 1}^{p} \frac{{T}_{i}^{Q}}{{T}_{i}^{wt} {L}_{COMP} \left({T}_{ij}\right) {L}_{COMM} \left({T}_{ij}\right)} \\ = {\sum }_{i = 1}^{p} \frac{{T}_{i}^{Q}}{{T}_{i}^{wt} {L}_{COMP} \left({T}_{ij}\right)}\end{matrix}$ where *L_{COMM}*(*T*_{*ij*)} = 1, where Rᵢⱼ is reward gained by the controller agent j for executing subtask i, p is number of independent subtasks, ${T}_{i}^{wt}$ is a waiting time of the subtask, *L*_{COMP}(*Tᵢⱼ*) is a computational latency, *L*_{COMM}(*Tᵢⱼ*) is a communication latency, ${T}_{i}^{Q}$ is a dimensionless task priority; and
ii. selecting a qualifying satellite among the one or more qualifying satellites present in the hop level having the maximum value of the reward function, based on the predefined soft real-time constraint defined for each task, as a controller agent for the associated single subtask of each task and handing over the associated subtask to an associated controller agent, wherein the hop level refers to a nearest hop level to the associated controller agent;
(v) if there are multiple subtasks present in the set of remaining subtasks for each task after sorting in the topological order, at the current level of execution of one or more execution levels, then:
(a) executing the multiple subtasks present in the set of remaining subtasks for each task after sorting in the topological order, at the current level of execution, by the associated controller agent selected in the static phase, if one or more resource requirements of the multiple subtasks matches with the one or more resource capabilities of the associated controller agent selected in the static phase and matches with the predefined soft real-time constraint; and
(b) handing over the multiple subtasks present in the set of remaining subtasks for each task after sorting in the topological order, at the current level of execution to other satellites for execution using a handover mechanism, if the one or more resource requirements of the multiple subtasks does not match with the one or more resource capabilities of the associated controller agent selected in the static phase and does not match with the predefined soft real-time constraint; and
executing the plurality of tasks by the plurality of satellites present in the satellite cluster and the one or more ground stations, using the optimized distributed schedule.

## Patentansprüche

1. Prozessorimplementiertes Verfahren (200) zur verteilten Aufgabenplanung in einem Satellitencluster für die Analyse von Erdbeobachtungsdaten, umfassend die folgenden Schritte:
Empfangen, über einen oder mehrere Hardwareprozessoren, einer Mehrzahl von Aufgaben, die durch eine Mehrzahl von Satelliten, die in dem Satellitencluster vorhanden sind, und eine oder mehrere Bodenstationen, die mit dem einen oder den mehreren Satelliten verbunden sind, ausgeführt werden sollen, einer vordefinierten weichen Echtzeitbeschränkung, die für jede Aufgabe der Mehrzahl von Aufgaben definiert ist, einer oder mehrerer Ressourcenanforderungen, die für jede Aufgabe erforderlich sind, und einer oder mehrerer Ressourcenfähigkeiten jedes des einen oder der mehreren Satelliten und jeder der einen oder mehreren Bodenstationen, wobei die Mehrzahl von Satelliten in dem Satellitencluster auf Sprungebenen konsistent sind, wobei die vordefinierte weiche Echtzeitbeschränkung eine maximale Verarbeitungsverzögerung ist, die als eine Abschlusszeit definiert ist, innerhalb der jede Aufgabe der Mehrzahl von Aufgaben abgeschlossen werden soll, wobei jede Aufgabe eine Mehrzahl von Unteraufgaben und eine oder mehrere Abhängigkeiten jeder Unteraufgabe von verbleibenden Unteraufgaben der Mehrzahl von Unteraufgaben umfasst, wobei jede Aufgabe in einer gerichteten azyklischen Graphen-, DAG-, Struktur mit einem vordefinierten Aufgabenarbeitsablauf für die Ausführung basierend auf den Abhängigkeiten definiert ist (202);
Zuweisen, über den einen oder die mehreren Hardwareprozessoren, der Mehrzahl von Aufgaben zu der Mehrzahl von Satelliten, die in dem Satellitencluster vorhanden sind, und der einen oder mehreren Bodenstationen, in einer statischen Phase und einer dynamischen Phase in einer Sequenz, unter Verwendung einer Optimierungstechnik, um einen optimierten verteilten Plan der Mehrzahl von Aufgaben zu erhalten, wobei das Planen der Aufgaben in der dynamischen Phase durch einen Planer durchgeführt wird, der eine Änderung der Intersatelliten- und Satelliten-Bodenstation-Konnektivität, eine Änderung des Ressourcenstatus und des Aufgabenstatus berücksichtigt, wobei die statische Phase und die dynamische Phase des verteilten Planungsalgorithmus für die Analyse von Erdbeobachtungsdaten in Satelliten mit niedriger Erdumlaufbahn, LEO, kollektive Rechenleistung in der Umlaufbahn und am Boden verwendet, die erforderlich ist, um die vordefinierte weiche Echtzeitbeschränkung von Erdbeobachtungs-, EO-, Anwendungen zu erfüllen (204),
wobei das Zuweisen der Mehrzahl von Aufgaben in der statischen Phase Folgendes umfasst:
(i) Identifizieren einer ersten Unteraufgabe unter der Mehrzahl von Unteraufgaben für jede Aufgabe, wobei die erste Unteraufgabe eine Erdbeobachtungsdatensammelaufgabe ist (204a1);
(ii) Empfangen einer oder mehrerer Ressourcen, die für die erste Unteraufgabe jeder Aufgabe erforderlich sind (204a2);
(iii) Identifizieren eines oder mehrerer qualifizierender Satelliten unter der Mehrzahl von Satelliten für die erste Unteraufgabe jeder Aufgabe basierend auf der einen oder den mehreren Ressourcenfähigkeiten jedes Satelliten und der einen oder den mehreren Ressourcen, die für die erste Unteraufgabe erforderlich sind (204a3);
(iv) Berechnen eines Werts einer Belohnungsfunktion für jeden des einen oder der mehreren qualifizierenden Satelliten zum Ausführen der ersten Unteraufgabe jeder Aufgabe basierend auf einem Satz von Betriebsattributen einer assoziierten ersten Unteraufgabe, wobei die Belohnungsfunktion in der Optimierungstechnik definiert ist (204a4); und
(v) Auswählen eines qualifizierenden Satelliten unter dem einen oder den mehreren qualifizierenden Satelliten mit einem Maximalwert der Belohnungsfunktion basierend auf der vordefinierten weichen Echtzeitbeschränkung, die für jede Aufgabe definiert ist, als einen Steuerungsagenten für jede Aufgabe der Mehrzahl von Aufgaben (204a5); und
wobei in der dynamischen Phase die Aufgaben in zwei Modi ausgeführt werden, einschließlich eines seriellen Modus und eines parallelen Modus, wobei in dem parallelen Ausführungsmodus die Aufgabe in der DAG-Struktur topologisch sortiert ist und die Unteraufgaben in Ausführungsebenen angeordnet sind, wobei der Steuerungsagent konfiguriert ist, um einen Steuerungsagenten in jedem Zweig innerhalb *h* Sprungdistanz zum Ausführen eines Teils der Unteraufgaben zu identifizieren, wobei das Planen der Mehrzahl von Aufgaben in der dynamischen Phase Folgendes umfasst:
(i) Ausführen der ersten Unteraufgabe jeder Aufgabe der Mehrzahl von Aufgaben durch einen assoziierten Steuerungsagenten, der in der statischen Phase ausgewählt ist (204b1);
(ii) Identifizieren eines Satzes von verbleibenden Unteraufgaben für jede Aufgabe der Mehrzahl von Aufgaben nach der Ausführung der ersten Unteraufgabe und Entfernen der ersten Unteraufgabe aus einer assoziierten Aufgabe (204b2);
(iii) Sortieren einer oder mehrerer Unteraufgaben, die in dem Satz von verbleibenden Unteraufgaben für jede Aufgabe der Mehrzahl von Aufgaben vorhanden sind, in einer topologischen Reihenfolge basierend auf der einen oder den mehreren Abhängigkeiten jeder Unteraufgabe (204b3);
(iv) wenn eine einzelne Unteraufgabe in dem Satz von verbleibenden Unteraufgaben für jede Aufgabe nach dem Sortieren in der topologischen Reihenfolge vorhanden ist, auf einer aktuellen Ausführungsebene von einer oder mehreren Ausführungsebenen, dann:
(a) Ausführen der einzelnen Unteraufgabe durch den assoziierten Steuerungsagenten, der in der statischen Phase ausgewählt ist, wenn eine oder mehrere Ressourcenanforderungen der einzelnen Unteraufgabe mit der einen oder den mehreren Ressourcenfähigkeiten des assoziierten Steuerungsagenten, der in der statischen Phase ausgewählt ist, übereinstimmen und mit der vordefinierten weichen Echtzeiteinschränkung übereinstimmen; und
(b) Übergeben der einzelnen Unteraufgabe an andere Satelliten zur Ausführung unter Verwendung eines Übergabemechanismus, wenn die eine oder die mehreren Ressourcenanforderungen der einzelnen Unteraufgabe nicht mit der einen oder den mehreren Ressourcenfähigkeiten des assoziierten Steuerungsagenten, der in der statischen Phase ausgewählt ist, übereinstimmen und nicht mit der vordefinierten weichen Echtzeiteinschränkung übereinstimmen (204b4), wobei der Schritt des Handhabens der einzelnen Unteraufgabe beinhaltet:
i. Berechnen des Werts der Belohnungsfunktion für jeden des einen oder der mehreren qualifizierenden Satelliten zum Ausführen der einzelnen Unteraufgabe jeder Aufgabe basierend auf dem Satz von Betriebsattributen der einzelnen Unteraufgabe (204b4d), wobei eine lokal erworbene Belohnung *Rₛₑᵣᵢₑₗₗ* unter Verwendung der Belohnungsfunktion als $\begin{matrix}{R}_{seriell} = {\sum }_{i = 1}^{p} {R}_{ij} \\ = {\sum }_{i = 1}^{p} \frac{{T}_{i}^{Q}}{{T}_{i}^{wt} {L}_{RECH} \left({T}_{\left.ij\right)}\right. {L}_{KOMM} \left({T}_{\left.ij\right)}\right.} \\ = {\sum }_{i = 1}^{p} \frac{{T}_{i}^{Q}}{{T}_{i}^{wt} {L}_{RECH} \left({T}_{\left.ij\right)}\right.}\end{matrix}$ bewertet wird, wobei *L_{KOMM}*(*T*_{*ij*)} = 1, wobei Rᵢ eine Belohnung ist, die durch den Steuerungsagenten j zum Ausführen der Unteraufgabe i erworben wird, p eine Anzahl von unabhängigen Unteraufgaben ist, ${T}_{i}^{wt}$ eine Wartezeit der Unteraufgabe ist, *L*_{RECH}(*Tᵢⱼ*) eine Rechenlatenz ist, *L*_{KOMM}(*Tᵢⱼ*) eine Kommunikationslatenz ist, ${T}_{i}^{Q}$ eine dimensionslose Aufgabenpriorität ist; und
ii. Auswählen eines qualifizierenden Satelliten unter dem einen oder den mehreren qualifizierenden Satelliten, die in der Sprungebene mit dem Maximalwert der Belohnungsfunktion vorhanden sind, basierend auf der vordefinierten weichen Echtzeiteinschränkung, die für jede Aufgabe definiert ist, als einen Steuerungsagenten für die assoziierte einzelne Unteraufgabe jeder Aufgabe und Übergeben der assoziierten Unteraufgabe an einen assoziierten Steuerungsagenten, wobei sich die Sprungebene auf eine nächste Sprungebene zu dem assoziierten Steuerungsagenten (204b4e) bezieht;
(v) wenn mehrere Unteraufgaben in dem Satz von verbleibenden Unteraufgaben für jede Aufgabe nach dem Sortieren in der topologischen Reihenfolge vorhanden sind, auf der aktuellen Ausführungsebene von einer oder mehreren Ausführungsebenen, dann:
(a) Ausführen der mehreren Unteraufgaben, die in dem Satz von verbleibenden Unteraufgaben für jede Aufgabe nach dem Sortieren in der topologischen Reihenfolge vorhanden sind, auf der aktuellen Ausführungsebene durch den assoziierten Steuerungsagenten, der in der statischen Phase ausgewählt ist, wenn eine oder mehrere Ressourcenanforderungen der mehreren Unteraufgaben mit der einen oder den mehreren Ressourcenfähigkeiten des assoziierten Steuerungsagenten, der in der statischen Phase ausgewählt ist, übereinstimmen und mit der vordefinierten weichen Echtzeiteinschränkung übereinstimmen; und
(b) Übergeben der mehreren Unteraufgaben, die in dem Satz von verbleibenden Unteraufgaben für jede Aufgabe nach dem Sortieren in der topologischen Reihenfolge vorhanden sind, auf der aktuellen Ausführungsebene an andere Satelliten zur Ausführung unter Verwendung eines Übergabemechanismus, wenn die eine oder die mehreren Ressourcenanforderungen der mehreren Unteraufgaben nicht mit der einen oder den mehreren Ressourcenfähigkeiten des assoziierten Steuerungsagenten, der in der statischen Phase ausgewählt ist, übereinstimmen und nicht mit der vordefinierten weichen Echtzeiteinschränkung übereinstimmen (204b5); und
Ausführen, über den einen oder die mehreren Hardwareprozessoren, der Mehrzahl von Aufgaben durch die Mehrzahl von Satelliten, die in dem Satellitencluster vorhanden sind, und die eine oder die mehreren Bodenstationen unter Verwendung des optimierten verteilten Zeitplans (206).

2. Verfahren nach Anspruch 1, wobei jede Unteraufgabe der Mehrzahl von Unteraufgaben, die in jeder Aufgabe vorhanden sind, mit einem Satz von Betriebsattributen assoziiert ist, die (i) die Wartezeit, (ii) die Rechenlatenz, (iii) die Kommunikationslatenz und (iv) eine Aufgabenpriorität umfassen.

3. Verfahren nach Anspruch 1, wobei die Mehrzahl von Unteraufgaben, die in jeder Aufgabe vorhanden sind, auf einer oder mehreren Ausführungsebenen basierend auf der einen oder den mehreren Abhängigkeiten jeder Unteraufgabe von verbleibenden Unteraufgaben der Mehrzahl von Unteraufgaben ausgeführt werden.

4. Verfahren nach Anspruch 1, wobei die Mehrzahl von Unteraufgaben, die in jeder Aufgabe vorhanden sind, eine oder mehrere der folgenden sind: (i) die Erdbeobachtungsdatensammelaufgabe, (ii) eine oder mehrere Erdbeobachtungsdatenanalyseaufgaben und (iii) eine oder mehrere Erdbeobachtungsdatenkommunikationsaufgaben, und wobei jede der einen oder der mehreren Erdbeobachtungsdatensammelaufgaben dazu dient, Erdbeobachtungsdaten durch jeden des einen oder der mehreren Satelliten für eine vordefinierte Region auf der Erde zu sammeln, jede der einen oder der mehreren Erdbeobachtungsdatenanalyseaufgaben dazu dient, die Erdbeobachtungsdaten durch die Mehrzahl von Satelliten oder die eine oder die mehreren Bodenstationen zu analysieren, um eine oder mehrere Schlussfolgerungen einer assoziierten Erdbeobachtungsdatensammelaufgabe zu bestimmen, und jede der einen oder der mehreren Erdbeobachtungsdatenkommunikationsaufgaben eine von (i) einer Datenaustauschunteraufgabe und (ii) einer Befehlsaustauschunteraufgabe zwischen der Mehrzahl von Satelliten und der einen oder den mehreren Bodenstationen ist.

5. Verfahren nach Anspruch 1, wobei dem Schritt des Berechnens des Werts der Belohnungsfunktion für jeden des einen oder der mehreren qualifizierenden Satelliten vorausgeht:
Senden einer Übergabeanforderungsnachricht durch den assoziierten Steuerungsagenten an einen oder mehrere Satelliten, die in der Sprungebene vorhanden sind, zum Ausführen der einzelnen Unteraufgabe (204b4a);
Empfangen der einen oder der mehreren Ressourcenfähigkeiten jedes des einen oder der mehreren Satelliten in der Sprungebene durch den assoziierten Steuerungsagenten (204b4b); und
Identifizieren des einen oder der mehreren qualifizierenden Satelliten unter dem einen oder den mehreren Satelliten, die in der Sprungebene vorhanden sind, zum Ausführen der einzelnen Unteraufgabe basierend auf der einen oder den mehreren Ressourcenfähigkeiten jedes der Mehrzahl von Satelliten und der einen oder den mehreren Ressourcen, die für die einzelne Unteraufgabe erforderlich sind (204b4c).

6. Verfahren nach Anspruch 1, wobei, wenn der eine oder die mehreren qualifizierenden Satelliten unter dem einen oder den mehreren Satelliten, die in der Sprungebene vorhanden sind, nicht zum Ausführen der einzelnen Unteraufgabe basierend auf der einen oder den mehreren Ressourcenfähigkeiten jedes der Mehrzahl von Satelliten und der einen oder den mehreren Ressourcen, die für die einzelne Unteraufgabe erforderlich sind, identifiziert werden und nicht mit der vordefinierten weichen Echtzeiteinschränkung übereinstimmen, dann die einzelne Unteraufgabe an den einen oder die mehreren Satelliten, die in der nächsten Sprungebene vorhanden sind, übergeben wird.

7. Verfahren nach Anspruch 1, wobei das Übergeben der mehreren Unteraufgaben, die in dem Satz von verbleibenden Unteraufgaben für jede Aufgabe nach dem Sortieren in der topologischen Reihenfolge vorhanden sind, auf der aktuellen Ausführungsebene an andere Satelliten zur Ausführung unter Verwendung des Übergabemechanismus, wenn die eine oder die mehreren Ressourcenanforderungen der mehreren Unteraufgaben nicht mit der einen oder den mehreren Ressourcenfähigkeiten des assoziierten Steuerungsagenten, der in der statischen Phase ausgewählt ist, übereinstimmen und nicht mit der vordefinierten weichen Echtzeiteinschränkung übereinstimmen, umfasst:
Partitionieren jeder der mehreren Unteraufgaben basierend auf einer vordefinierten Partitionierungsgröße (204b5a);
Senden einer Übergabeanforderungsnachricht durch den assoziierten Steuerungsagenten an den einen oder die mehreren Satelliten, die in der Sprungebene vorhanden sind, zum Ausführen der mehreren Unteraufgaben (204b5b);
Empfangen der einen oder der mehreren Ressourcenfähigkeiten jedes des einen oder der mehreren Satelliten in der Sprungebene durch den assoziierten Steuerungsagenten (204b5c);
Identifizieren des einen oder der mehreren qualifizierenden Satelliten unter dem einen oder den mehreren Satelliten, die in der Sprungebene vorhanden sind, zum Ausführen der mehreren Unteraufgaben nach dem Partitionieren basierend auf der einen oder den mehreren Ressourcenfähigkeiten jedes Satelliten und der einen oder den mehreren Ressourcen, die für jede der mehreren Unteraufgaben erforderlich sind (204b5d);
Berechnen des Werts der Belohnungsfunktion für jeden des einen oder der mehreren qualifizierenden Satelliten zum Ausführen der mehreren Unteraufgaben jeder Aufgabe nach dem Partitionieren basierend auf dem Satz von Betriebsattributen, die mit jeder Unteraufgabe assoziiert sind (204b5e); und
Auswählen eines qualifizierenden Satelliten unter dem einen oder den mehreren qualifizierenden Satelliten mit dem Maximalwert der Belohnungsfunktion basierend auf der vordefinierten weichen Echtzeitbeschränkung, die für jede Aufgabe definiert ist, als einen Steuerungsagenten zum Ausführen der mehreren Unteraufgaben jeder Aufgabe nach dem Partitionieren und Übergeben der mehreren Unteraufgaben jeder Aufgabe an einen assoziierten Steuerungsagenten, und
wenn der eine oder die mehreren qualifizierenden Satelliten unter dem einen oder den mehreren Satelliten, die in der Sprungebene vorhanden sind, nicht zum Ausführen der mehreren Unteraufgaben basierend auf der einen oder den mehreren Ressourcenfähigkeiten jedes Satelliten und der einen oder den mehreren Ressourcen, die für jede der mehreren Unteraufgaben erforderlich sind, identifiziert werden und nicht mit der vordefinierten weichen Echtzeiteinschränkung übereinstimmen, dann Verteilen der mehreren Unteraufgaben jeder Aufgabe an den einen oder die mehreren Satelliten, die in einer nächsten Sprungebene vorhanden sind (204b5f).

8. System (100) zur verteilten Aufgabenplanung in einem Satellitencluster für die Analyse von Erdbeobachtungsdaten, umfassend:
einen Speicher (102), der Anweisungen speichert;
eine oder mehrere Eingabe/Ausgabe(E/A)-Schnittstellen (106); und
einen oder mehrere Hardwareprozessoren (104), die mit dem Speicher (102) über die eine oder die mehreren E/A-Schnittstellen (106) gekoppelt sind, wobei der eine oder die mehreren Hardwareprozessoren (104) durch die Anweisungen konfiguriert sind zum:
Empfangen einer Mehrzahl von Aufgaben, die durch eine Mehrzahl von Satelliten, die in dem Satellitencluster vorhanden sind, und eine oder mehrere Bodenstationen, die mit dem einen oder den mehreren Satelliten verbunden sind, ausgeführt werden sollen, einer vordefinierten weichen Echtzeitbeschränkung, die für jede Aufgabe der Mehrzahl von Aufgaben definiert ist, einer oder mehrerer Ressourcenanforderungen, die für jede Aufgabe erforderlich sind, und einer oder mehrerer Ressourcenfähigkeiten jedes des einen oder der mehreren Satelliten und jeder der einen oder mehreren Bodenstationen, wobei die Mehrzahl von Satelliten in dem Satellitencluster auf Sprungebenen konsistent sind, wobei die vordefinierte weiche Echtzeitbeschränkung eine maximale Verarbeitungsverzögerung ist, die als eine Abschlusszeit definiert ist, innerhalb der jede Aufgabe der Mehrzahl von Aufgaben abgeschlossen werden soll, wobei jede Aufgabe eine Mehrzahl von Unteraufgaben und eine oder mehrere Abhängigkeiten jeder Unteraufgabe von verbleibenden Unteraufgaben der Mehrzahl von Unteraufgaben umfasst, wobei jede Aufgabe in einer gerichteten azyklischen Graphen-, DAG-, Struktur mit einem vordefinierten Aufgabenarbeitsablauf für die Ausführung basierend auf den Abhängigkeiten definiert ist;
Zuweisen der Mehrzahl von Aufgaben zu der Mehrzahl von Satelliten, die in dem Satellitencluster vorhanden sind, und der einen oder mehreren Bodenstationen, in einer statischen Phase und einer dynamischen Phase in einer Sequenz, unter Verwendung einer Optimierungstechnik, um einen optimierten verteilten Plan der Mehrzahl von Aufgaben zu erhalten, wobei das Planen der Aufgaben in der dynamischen Phase durch einen Planer durchgeführt wird, der eine Änderung der Intersatelliten- und Satelliten-Bodenstation-Konnektivität, eine Änderung des Ressourcenstatus und des Aufgabenstatus berücksichtigt, wobei die statische Phase und die dynamische Phase des verteilten Planungsalgorithmus für die Analyse von Erdbeobachtungsdaten in Satelliten mit niedriger Erdumlaufbahn, LEO, kollektive Rechenleistung in der Umlaufbahn und am Boden verwendet, die erforderlich ist, um die vordefinierte weiche Echtzeitbeschränkung von Erdbeobachtungs-, EO-, Anwendungen zu erfüllen,
wobei das Zuweisen der Mehrzahl von Aufgaben in der statischen Phase Folgendes umfasst:
(i) Identifizieren einer ersten Unteraufgabe unter der Mehrzahl von Unteraufgaben für jede Aufgabe, wobei die erste Unteraufgabe eine Erdbeobachtungsdatensammelaufgabe ist;
(ii) Empfangen einer oder mehrerer Ressourcen, die für die erste Unteraufgabe jeder Aufgabe erforderlich sind;
(iii) Identifizieren eines oder mehrerer qualifizierender Satelliten unter der Mehrzahl von Satelliten für die erste Unteraufgabe jeder Aufgabe basierend auf der einen oder den mehreren Ressourcenfähigkeiten jedes Satelliten und der einen oder den mehreren Ressourcen, die für die erste Unteraufgabe erforderlich sind;
(iv) Berechnen eines Werts einer Belohnungsfunktion für jeden des einen oder der mehreren qualifizierenden Satelliten zum Ausführen der ersten Unteraufgabe jeder Aufgabe basierend auf einem Satz von Betriebsattributen einer assoziierten ersten Unteraufgabe, wobei die Belohnungsfunktion in der Optimierungstechnik definiert ist; und
(v) Auswählen eines qualifizierenden Satelliten unter dem einen oder den mehreren qualifizierenden Satelliten mit einem Maximalwert der Belohnungsfunktion basierend auf der vordefinierten weichen Echtzeitbeschränkung, die für jede Aufgabe definiert ist, als einen Steuerungsagenten für jede Aufgabe der Mehrzahl von Aufgaben; und
wobei in der dynamischen Phase die Aufgaben in zwei Modi ausgeführt werden, einschließlich eines seriellen Modus und eines parallelen Modus, wobei in dem parallelen Ausführungsmodus die Aufgabe in der DAG-Struktur topologisch sortiert ist und die Unteraufgaben in Ausführungsebenen angeordnet sind, wobei der Steuerungsagent konfiguriert ist, um einen Steuerungsagenten in jedem Zweig innerhalb *h* Sprungdistanz zum Ausführen eines Teils der Unteraufgaben zu identifizieren, wobei das Planen der Mehrzahl von Aufgaben in der dynamischen Phase Folgendes umfasst:
(i) Ausführen der ersten Unteraufgabe jeder Aufgabe der Mehrzahl von Aufgaben durch einen assoziierten Steuerungsagenten, der in der statischen Phase ausgewählt ist;
(ii) Identifizieren eines Satzes von verbleibenden Unteraufgaben für jede Aufgabe der Mehrzahl von Aufgaben nach der Ausführung der ersten Unteraufgabe und Entfernen der ersten Unteraufgabe aus einer assoziierten Aufgabe;
(iii) Sortieren einer oder mehrerer Unteraufgaben, die in dem Satz von verbleibenden Unteraufgaben für jede Aufgabe der Mehrzahl von Aufgaben vorhanden sind, in einer topologischen Reihenfolge basierend auf der einen oder den mehreren Abhängigkeiten jeder Unteraufgabe;
(iv) wenn eine einzelne Unteraufgabe in dem Satz von verbleibenden Unteraufgaben für jede Aufgabe nach dem Sortieren in der topologischen Reihenfolge vorhanden ist, auf einer aktuellen Ausführungsebene von einer oder mehreren Ausführungsebenen, dann:
(a) Ausführen der einzelnen Unteraufgabe durch den assoziierten Steuerungsagenten, der in der statischen Phase ausgewählt ist, wenn eine oder mehrere Ressourcenanforderungen der einzelnen Unteraufgabe mit der einen oder den mehreren Ressourcenfähigkeiten des assoziierten Steuerungsagenten, der in der statischen Phase ausgewählt ist, übereinstimmen und mit der vordefinierten weichen Echtzeiteinschränkung übereinstimmen; und
(b) Übergeben der einzelnen Unteraufgabe an andere Satelliten zur Ausführung unter Verwendung eines Übergabemechanismus, wenn die eine oder die mehreren Ressourcenanforderungen der einzelnen Unteraufgabe nicht mit der einen oder den mehreren Ressourcenfähigkeiten des assoziierten Steuerungsagenten, der in der statischen Phase ausgewählt ist, übereinstimmen und nicht mit der vordefinierten weichen Echtzeiteinschränkung übereinstimmen, wobei der Schritt des Handhabens der einzelnen Unteraufgabe beinhaltet:
i. Berechnen des Werts der Belohnungsfunktion für jeden des einen oder der mehreren qualifizierenden Satelliten zum Ausführen der einzelnen Unteraufgabe jeder Aufgabe basierend auf dem Satz von Betriebsattributen der einzelnen Unteraufgabe, wobei eine lokal erworbene Belohnung *Rₛₑᵣᵢₑₗₗ* unter Verwendung der Belohnungsfunktion als $\begin{matrix}{R}_{seriell} = {\sum }_{i = 1}^{p} {R}_{ij} \\ = {\sum }_{i = 1}^{p} \frac{{T}_{i}^{Q}}{{T}_{i}^{wt} {L}_{RECH} \left({T}_{\left.ij\right)}\right. {L}_{KOMM} \left({T}_{\left.ij\right)}\right.} \\ = {\sum }_{i = 1}^{p} \frac{{T}_{i}^{Q}}{{T}_{i}^{wt} {L}_{RECH} \left({T}_{\left.ij\right)}\right.}\end{matrix}$ bewertet wird, wobei *L_{KOMM}*(*T*_{*ij*)} = 1 , wobei Rᵢ eine Belohnung ist, die durch den Steuerungsagenten j zum Ausführen der Unteraufgabe i erworben wird, p eine Anzahl von unabhängigen Unteraufgaben ist, ${T}_{i}^{wt}$ eine Wartezeit der Unteraufgabe ist, *L*_{RECH}(*Tᵢⱼ*) eine Rechenlatenz ist, *L*_{KOMM}(*Tᵢⱼ*) eine Kommunikationslatenz ist, ${T}_{i}^{Q}$ eine dimensionslose Aufgabenpriorität ist; und
ii. Auswählen eines qualifizierenden Satelliten unter dem einen oder den mehreren qualifizierenden Satelliten, die in der Sprungebene mit dem Maximalwert der Belohnungsfunktion vorhanden sind, basierend auf der vordefinierten weichen Echtzeitbeschränkung, die für jede Aufgabe definiert ist, als einen Steuerungsagenten für die assoziierte einzelne Unteraufgabe jeder Aufgabe und Übergeben der assoziierten Unteraufgabe an einen assoziierten Steuerungsagenten, wobei sich die Sprungebene auf eine nächste Sprungebene zu dem assoziierten Steuerungsagenten bezieht;
(v) wenn mehrere Unteraufgaben in dem Satz von verbleibenden Unteraufgaben für jede Aufgabe nach dem Sortieren in der topologischen Reihenfolge vorhanden sind, auf der aktuellen Ausführungsebene von einer oder mehreren Ausführungsebenen, dann:
(a) Ausführen der mehreren Unteraufgaben, die in dem Satz von verbleibenden Unteraufgaben für jede Aufgabe nach dem Sortieren in der topologischen Reihenfolge vorhanden sind, auf der aktuellen Ausführungsebene durch den assoziierten Steuerungsagenten, der in der statischen Phase ausgewählt ist, wenn eine oder mehrere Ressourcenanforderungen der mehreren Unteraufgaben mit der einen oder den mehreren Ressourcenfähigkeiten des assoziierten Steuerungsagenten, der in der statischen Phase ausgewählt ist, übereinstimmen und mit der vordefinierten weichen Echtzeiteinschränkung übereinstimmen; und
(b) Übergeben der mehreren Unteraufgaben, die in dem Satz von verbleibenden Unteraufgaben für jede Aufgabe nach dem Sortieren in der topologischen Reihenfolge vorhanden sind, auf der aktuellen Ausführungsebene an andere Satelliten zur Ausführung unter Verwendung eines Übergabemechanismus, wenn die eine oder die mehreren Ressourcenanforderungen der mehreren Unteraufgaben nicht mit der einen oder den mehreren Ressourcenfähigkeiten des assoziierten Steuerungsagenten, der in der statischen Phase ausgewählt ist, übereinstimmen und nicht mit der vordefinierten weichen Echtzeiteinschränkung übereinstimmen; und
Ausführen der Mehrzahl von Aufgaben durch die Mehrzahl von Satelliten, die in dem Satellitencluster vorhanden sind, und die eine oder die mehreren Bodenstationen unter Verwendung des optimierten verteilten Zeitplans.

9. System nach Anspruch 8, wobei jede Unteraufgabe der Mehrzahl von Unteraufgaben, die in jeder Aufgabe vorhanden sind, mit einem Satz von Betriebsattributen assoziiert ist, die (i) die Wartezeit, (ii) die Rechenlatenz, (iii) die Kommunikationslatenz und (iv) eine Aufgabenpriorität umfassen.

10. System nach Anspruch 8, wobei die Mehrzahl von Unteraufgaben, die in jeder Aufgabe vorhanden sind, auf einer oder mehreren Ausführungsebenen basierend auf der einen oder den mehreren Abhängigkeiten jeder Unteraufgabe von verbleibenden Unteraufgaben der Mehrzahl von Unteraufgaben ausgeführt werden.

11. System nach Anspruch 8, wobei die Mehrzahl von Unteraufgaben, die in jeder Aufgabe vorhanden sind, eine oder mehrere der folgenden sind: (i) die Erdbeobachtungsdatensammelaufgabe, (ii) eine oder mehrere Erdbeobachtungsdatenanalyseaufgaben und (iii) eine oder mehrere Erdbeobachtungsdatenkommunikationsaufgaben, und wobei jede der einen oder der mehreren Erdbeobachtungsdatensammelaufgaben dazu dient, Erdbeobachtungsdaten durch jeden des einen oder der mehreren Satelliten für eine vordefinierte Region auf der Erde zu sammeln, jede der einen oder der mehreren Erdbeobachtungsdatenanalyseaufgaben dazu dient, die Erdbeobachtungsdaten durch die Mehrzahl von Satelliten oder die eine oder die mehreren Bodenstationen zu analysieren, um eine oder mehrere Schlussfolgerungen einer assoziierten Erdbeobachtungsdatensammelaufgabe zu bestimmen, und jede der einen oder der mehreren Erdbeobachtungsdatenkommunikationsaufgaben eine von (i) einer Datenaustauschunteraufgabe und (ii) einer Befehlsaustauschunteraufgabe zwischen der Mehrzahl von Satelliten und der einen oder den mehreren Bodenstationen ist.

12. System nach Anspruch 8, wobei dem Schritt des Berechnens des Werts der Belohnungsfunktion für jeden des einen oder der mehreren qualifizierenden Satelliten vorausgeht:
Senden einer Übergabeanforderungsnachricht durch den assoziierten Steuerungsagenten an einen oder mehrere Satelliten, die in der Sprungebene vorhanden sind, zum Ausführen der einzelnen Unteraufgabe;
Empfangen der einen oder der mehreren Ressourcenfähigkeiten jedes des einen oder der mehreren Satelliten in der Sprungebene durch den assoziierten Steuerungsagenten; und
Identifizieren des einen oder der mehreren qualifizierenden Satelliten unter dem einen oder den mehreren Satelliten, die in der Sprungebene vorhanden sind, zum Ausführen der einzelnen Unteraufgabe basierend auf der einen oder den mehreren Ressourcenfähigkeiten jedes Satelliten und der einen oder den mehreren Ressourcen, die für die einzelne Unteraufgabe erforderlich sind.

13. System nach Anspruch 8, wobei der eine oder die mehreren Hardwareprozessoren (104) dazu konfiguriert sind, die einzelne Unteraufgabe an den einen oder die mehreren Satelliten, die in der nächsten Sprungebene vorhanden sind, zu übergeben, wenn der eine oder die mehreren qualifizierenden Satelliten unter dem einen oder den mehreren Satelliten, die in der Sprungebene vorhanden sind, nicht zum Ausführen der einzelnen Unteraufgabe basierend auf der einen oder den mehreren Ressourcenfähigkeiten jedes Satelliten und der einen oder den mehreren Ressourcen, die für die einzelne Unteraufgabe erforderlich sind, identifiziert werden und nicht mit der vordefinierten weichen Echtzeiteinschränkung übereinstimmen.

14. System nach Anspruch 8, wobei der eine oder die mehreren Hardwareprozessoren (104) dazu konfiguriert sind, die mehreren Unteraufgaben, die in dem Satz von verbleibenden Unteraufgaben für jede Aufgabe nach dem Sortieren in der topologischen Reihenfolge vorhanden sind, auf der aktuellen Ausführungsebene an andere Satelliten zur Ausführung unter Verwendung des Übergabemechanismus zu übergeben, wenn die eine oder die mehreren Ressourcenanforderungen der mehreren Unteraufgaben nicht mit der einen oder den mehreren Ressourcenfähigkeiten des assoziierten Steuerungsagenten, der in der statischen Phase ausgewählt ist, übereinstimmen und nicht mit der vordefinierten weichen Echtzeiteinschränkung übereinstimmen, durch:
Partitionieren jeder der mehreren Unteraufgaben basierend auf einer vordefinierten Partitionierungsgröße;
Senden einer Übergabeanforderungsnachricht durch den assoziierten Steuerungsagenten an den einen oder die mehreren Satelliten, die in der Sprungebene vorhanden sind, zum Ausführen der mehreren Unteraufgaben;
Empfangen der einen oder der mehreren Ressourcenfähigkeiten jedes des einen oder der mehreren Satelliten in der Sprungebene durch den assoziierten Steuerungsagenten;
Identifizieren des einen oder der mehreren qualifizierenden Satelliten unter dem einen oder den mehreren Satelliten, die in der Sprungebene vorhanden sind, zum Ausführen der mehreren Unteraufgaben nach dem Partitionieren basierend auf der einen oder den mehreren Ressourcenfähigkeiten jedes der Mehrzahl von Satelliten und der einen oder den mehreren Ressourcen, die für jede der mehreren Unteraufgaben erforderlich sind;
Berechnen des Werts der Belohnungsfunktion für jeden des einen oder der mehreren qualifizierenden Satelliten zum Ausführen der mehreren Unteraufgaben jeder Aufgabe nach dem Partitionieren basierend auf dem Satz von Betriebsattributen, die mit jeder Unteraufgabe assoziiert sind;
Auswählen eines qualifizierenden Satelliten unter dem einen oder den mehreren qualifizierenden Satelliten mit dem Maximalwert der Belohnungsfunktion basierend auf der vordefinierten weichen Echtzeitbeschränkung, die für jede Aufgabe definiert ist, als einen Steuerungsagenten zum Ausführen der mehreren Unteraufgaben jeder Aufgabe nach dem Partitionieren und Übergeben der mehreren Unteraufgaben jeder Aufgabe an einen assoziierten Steuerungsagenten; und
Verteilen der mehreren Unteraufgaben jeder Aufgabe an den einen oder die mehreren Satelliten, die in einer nächsten Sprungebene vorhanden sind, wenn der eine oder die mehreren qualifizierenden Satelliten unter dem einen oder den mehreren Satelliten, die in der Sprungebene vorhanden sind, nicht zum Ausführen der mehreren Unteraufgaben basierend auf der einen oder den mehreren Ressourcenfähigkeiten jedes der Mehrzahl von Satelliten und der einen oder den mehreren Ressourcen, die für jede der mehreren Unteraufgaben erforderlich sind, identifiziert werden und nicht mit der vordefinierten weichen Echtzeiteinschränkung übereinstimmen.

15. Ein oder mehrere nichtflüchtige maschinenlesbare Informationsspeichermedien, die eine oder mehrere Anweisungen umfassen, die bei Ausführung durch einen oder mehrere Hardwareprozessoren bewirken, dass:
Empfangen einer Mehrzahl von Aufgaben, die durch eine Mehrzahl von Satelliten, die in einem Satellitencluster vorhanden sind, und eine oder mehrere Bodenstationen, die mit dem einen oder den mehreren Satelliten verbunden sind, ausgeführt werden sollen, einer vordefinierten weichen Echtzeitbeschränkung, die für jede Aufgabe der Mehrzahl von Aufgaben definiert ist, einer oder mehrerer Ressourcenanforderungen, die für jede Aufgabe erforderlich sind, und einer oder mehrerer Ressourcenfähigkeiten jedes des einen oder der mehreren Satelliten und jeder der einen oder mehreren Bodenstationen, wobei die Mehrzahl von Satelliten in dem Satellitencluster auf Sprungebenen konsistent sind, wobei die vordefinierte weiche Echtzeitbeschränkung eine maximale Verarbeitungsverzögerung ist, die als eine Abschlusszeit definiert ist, innerhalb der jede Aufgabe der Mehrzahl von Aufgaben abgeschlossen werden soll, wobei jede Aufgabe eine Mehrzahl von Unteraufgaben und eine oder mehrere Abhängigkeiten jeder Unteraufgabe von verbleibenden Unteraufgaben der Mehrzahl von Unteraufgaben umfasst, wobei jede Aufgabe in einer gerichteten azyklischen Graphen-, DAG-, Struktur mit einem vordefinierten Aufgabenarbeitsablauf für die Ausführung basierend auf den Abhängigkeiten definiert ist;
Zuweisen der Mehrzahl von Aufgaben zu der Mehrzahl von Satelliten, die in dem Satellitencluster vorhanden sind, und der einen oder mehreren Bodenstationen, in einer statischen Phase und einer dynamischen Phase in einer Sequenz, unter Verwendung einer Optimierungstechnik, um einen optimierten verteilten Plan der Mehrzahl von Aufgaben zu erhalten, wobei das Planen der Aufgaben in der dynamischen Phase durch einen Planer durchgeführt wird, der eine Änderung der Intersatelliten- und Satelliten-Bodenstation-Konnektivität, eine Änderung des Ressourcenstatus und des Aufgabenstatus berücksichtigt, wobei die statische Phase und die dynamische Phase des verteilten Planungsalgorithmus für die Analyse von Erdbeobachtungsdaten in Satelliten mit niedriger Erdumlaufbahn, LEO, kollektive Rechenleistung in der Umlaufbahn und am Boden verwendet, die erforderlich ist, um die vordefinierte weiche Echtzeitbeschränkung von Erdbeobachtungs-, EO-, Anwendungen zu erfüllen,
wobei das Zuweisen der Mehrzahl von Aufgaben in der statischen Phase Folgendes umfasst:
(i) Identifizieren einer ersten Unteraufgabe unter der Mehrzahl von Unteraufgaben für jede Aufgabe, wobei die erste Unteraufgabe eine Erdbeobachtungsdatensammelaufgabe ist;
(ii) Empfangen einer oder mehrerer Ressourcen, die für die erste Unteraufgabe jeder Aufgabe erforderlich sind;
(iii) Identifizieren eines oder mehrerer qualifizierender Satelliten unter der Mehrzahl von Satelliten für die erste Unteraufgabe jeder Aufgabe basierend auf der einen oder den mehreren Ressourcenfähigkeiten jedes Satelliten und der einen oder den mehreren Ressourcen, die für die erste Unteraufgabe erforderlich sind;
(iv) Berechnen eines Werts einer Belohnungsfunktion für jeden des einen oder der mehreren qualifizierenden Satelliten zum Ausführen der ersten Unteraufgabe jeder Aufgabe basierend auf einem Satz von Betriebsattributen einer assoziierten ersten Unteraufgabe, wobei die Belohnungsfunktion in der Optimierungstechnik definiert ist; und
(v) Auswählen eines qualifizierenden Satelliten unter dem einen oder den mehreren qualifizierenden Satelliten mit einem Maximalwert der Belohnungsfunktion basierend auf der vordefinierten weichen Echtzeitbeschränkung, die für jede Aufgabe definiert ist, als einen Steuerungsagenten für jede Aufgabe der Mehrzahl von Aufgaben; und
wobei in der dynamischen Phase die Aufgaben in zwei Modi ausgeführt werden, einschließlich eines seriellen Modus und eines parallelen Modus, wobei in dem parallelen Ausführungsmodus die Aufgabe in der DAG-Struktur topologisch sortiert ist und die Unteraufgaben in Ausführungsebenen angeordnet sind, wobei der Steuerungsagent konfiguriert ist, um einen Steuerungsagenten in jedem Zweig innerhalb *h* Sprungdistanz zum Ausführen eines Teils der Unteraufgaben zu identifizieren, wobei das Planen der Mehrzahl von Aufgaben in der dynamischen Phase Folgendes umfasst:
(i) Ausführen der ersten Unteraufgabe jeder Aufgabe der Mehrzahl von Aufgaben durch einen assoziierten Steuerungsagenten, der in der statischen Phase ausgewählt ist;
(ii) Identifizieren eines Satzes von verbleibenden Unteraufgaben für jede Aufgabe der Mehrzahl von Aufgaben nach der Ausführung der ersten Unteraufgabe und Entfernen der ersten Unteraufgabe aus einer assoziierten Aufgabe;
(iii) Sortieren einer oder mehrerer Unteraufgaben, die in dem Satz von verbleibenden Unteraufgaben für jede Aufgabe der Mehrzahl von Aufgaben vorhanden sind, in einer topologischen Reihenfolge basierend auf der einen oder den mehreren Abhängigkeiten jeder Unteraufgabe;
(iv) wenn eine einzelne Unteraufgabe in dem Satz von verbleibenden Unteraufgaben für jede Aufgabe nach dem Sortieren in der topologischen Reihenfolge vorhanden ist, auf einer aktuellen Ausführungsebene von einer oder mehreren Ausführungsebenen, dann:
(a) Ausführen der einzelnen Unteraufgabe durch den assoziierten Steuerungsagenten, der in der statischen Phase ausgewählt ist, wenn eine oder mehrere Ressourcenanforderungen der einzelnen Unteraufgabe mit der einen oder den mehreren Ressourcenfähigkeiten des assoziierten Steuerungsagenten, der in der statischen Phase ausgewählt ist, übereinstimmen und mit der vordefinierten weichen Echtzeiteinschränkung übereinstimmen; und
(b) Übergeben der einzelnen Unteraufgabe an andere Satelliten zur Ausführung unter Verwendung eines Übergabemechanismus, wenn die eine oder die mehreren Ressourcenanforderungen der einzelnen Unteraufgabe nicht mit der einen oder den mehreren Ressourcenfähigkeiten des assoziierten Steuerungsagenten, der in der statischen Phase ausgewählt ist, übereinstimmen und nicht mit der vordefinierten weichen Echtzeiteinschränkung übereinstimmen, wobei der Schritt des Handhabens der einzelnen Unteraufgabe beinhaltet:
i. Berechnen des Werts der Belohnungsfunktion für jeden des einen oder der mehreren qualifizierenden Satelliten zum Ausführen der einzelnen Unteraufgabe jeder Aufgabe basierend auf dem Satz von Betriebsattributen der einzelnen Unteraufgabe, wobei eine lokal erworbene Belohnung *Rₛₑᵣᵢₑₗₗₑ* unter Verwendung der Belohnungsfunktion als $\begin{matrix}{R}_{serielle} = {\sum }_{i = 1}^{p} {R}_{ij} \\ = {\sum }_{i = 1}^{p} \frac{{T}_{i}^{Q}}{{T}_{i}^{wt} {L}_{RECH} \left({T}_{\left.ij\right)}\right. {L}_{KOMM} \left({T}_{\left.ij\right)}\right.} \\ = {\sum }_{i = 1}^{p} \frac{{T}_{i}^{Q}}{{T}_{i}^{wt} {L}_{RECH} \left({T}_{\left.ij\right)}\right.}\end{matrix}$ bewertet wird, wobei *L_{KOMM}*(*T*_{*ij*)} = 1, wobei Rᵢⱼ eine Belohnung ist, die durch den Steuerungsagenten j zum Ausführen der Unteraufgabe i erworben wird, p eine Anzahl von unabhängigen Unteraufgaben ist, ${T}_{i}^{wt}$ eine Wartezeit der Unteraufgabe ist, *L*_{RECH}(*Tᵢⱼ*) eine Rechenlatenz ist, *L*_{KOMM}(*Tᵢⱼ*) eine Kommunikationslatenz ist, ${T}_{i}^{Q}$ eine dimensionslose Aufgabenpriorität ist; und
ii. Auswählen eines qualifizierenden Satelliten unter dem einen oder den mehreren qualifizierenden Satelliten, die in der Sprungebene mit dem Maximalwert der Belohnungsfunktion vorhanden sind, basierend auf der vordefinierten weichen Echtzeiteinschränkung, die für jede Aufgabe definiert ist, als einen Steuerungsagenten für die assoziierte einzelne Unteraufgabe jeder Aufgabe und Übergeben der assoziierten Unteraufgabe an einen assoziierten Steuerungsagenten, wobei sich die Sprungebene auf eine nächste Sprungebene zu dem assoziierten Steuerungsagenten bezieht;
(v) wenn mehrere Unteraufgaben in dem Satz von verbleibenden Unteraufgaben für jede Aufgabe nach dem Sortieren in der topologischen Reihenfolge vorhanden sind, auf der aktuellen Ausführungsebene von einer oder mehreren Ausführungsebenen, dann:
(a) Ausführen der mehreren Unteraufgaben, die in dem Satz von verbleibenden Unteraufgaben für jede Aufgabe nach dem Sortieren in der topologischen Reihenfolge vorhanden sind, auf der aktuellen Ausführungsebene durch den assoziierten Steuerungsagenten, der in der statischen Phase ausgewählt ist, wenn eine oder mehrere Ressourcenanforderungen der mehreren Unteraufgaben mit der einen oder den mehreren Ressourcenfähigkeiten des assoziierten Steuerungsagenten, der in der statischen Phase ausgewählt ist, übereinstimmen und mit der vordefinierten weichen Echtzeiteinschränkung übereinstimmen; und
(b) Übergeben der mehreren Unteraufgaben, die in dem Satz von verbleibenden Unteraufgaben für jede Aufgabe nach dem Sortieren in der topologischen Reihenfolge vorhanden sind, auf der aktuellen Ausführungsebene an andere Satelliten zur Ausführung unter Verwendung eines Übergabemechanismus, wenn die eine oder die mehreren Ressourcenanforderungen der mehreren Unteraufgaben nicht mit der einen oder den mehreren Ressourcenfähigkeiten des assoziierten Steuerungsagenten, der in der statischen Phase ausgewählt ist, übereinstimmen und nicht mit der vordefinierten weichen Echtzeiteinschränkung übereinstimmen; und
Ausführen der Mehrzahl von Aufgaben durch die Mehrzahl von Satelliten, die in dem Satellitencluster vorhanden sind, und die eine oder die mehreren Bodenstationen unter Verwendung des optimierten verteilten Zeitplans.

## Revendications

1. Procédé mis en œuvre par processeur (200) de planification de tâches distribuées dans un groupe de satellites pour l'analyse de données d'observation de la Terre, comprenant les étapes consistant à :
recevoir, via un ou plusieurs processeurs matériels, une pluralité de tâches à exécuter par une pluralité de satellites présents dans le groupe de satellites et une ou plusieurs stations au sol connectées aux un ou plusieurs satellites, une contrainte de temps réel souple prédéfinie définie pour chaque tâche de la pluralité de tâches, une ou plusieurs exigences de ressources requises pour chaque tâche, et une ou plusieurs capacités de ressources de chacun des un ou plusieurs satellites et de chacune des une ou plusieurs stations au sol, dans lequel la pluralité de satellites dans le groupe de satellites sont organisées niveaux de saut, dans lequel la contrainte de temps réel souple prédéfinie est un délai de traitement maximal défini comme un temps d'achèvement dans lequel chaque tâche de la pluralité de tâches doit être achevée, dans lequel chaque tâche comprend une pluralité de sous-tâches et une ou plusieurs dépendances de chaque sous-tâche sur des sous-tâches restantes de la pluralité de sous-tâches, dans lequel chaque tâche est définie dans une structure de graphe acyclique dirigé, DAG, avec un flux de travail de tâche prédéfini pour l'exécution sur la base des dépendances (202) ;
attribuer, via les un ou plusieurs processeurs matériels, la pluralité de tâches à la pluralité de satellites présents dans le groupe de satellites et aux une ou plusieurs stations au sol, dans une phase statique et une phase dynamique dans une séquence, en utilisant une technique d'optimisation, pour obtenir une planification distribuée optimisée de la pluralité de tâches, dans lequel la planification des tâches dans la phase dynamique est effectuée, par un planificateur, qui prend en compte l'évolution de la connectivité entre satellites et entre satellites et stations au sol, ainsi que l'évolution de l'état des ressources et l'état des tâches, dans lequel la phase statique et la phase dynamique de l'algorithme de planification distribuée pour l'analyse de données d'observation de la Terre dans des satellites en orbite terrestre basse, LEO, utilise une puissance de calcul collective en orbite et au sol qui est requise pour satisfaire la contrainte de temps réel souple prédéfinie d'applications d'observation de la Terre, EO, (204),
dans lequel l'attribution de la pluralité de tâches dans la phase statique comprend les étapes consistant à :
(i) identifier une première sous-tâche parmi la pluralité de sous-tâches pour chaque tâche, dans lequel la première sous-tâche est une tâche de collecte de données d'observation de la Terre (204a1) ;
(ii) recevoir une ou plusieurs ressources requises pour la première sous-tâche de chaque tâche (204a2) ;
(iii) identifier un ou plusieurs satellites admissibles parmi la pluralité de satellites, pour la première sous-tâche de chaque tâche, sur la base des une ou plusieurs capacités de ressources de chaque satellite, et des une ou plusieurs ressources requises pour la première sous-tâche (204a3) ;
(iv) calculer une valeur d'une fonction de récompense pour chacun des un ou plusieurs satellites admissibles, pour exécuter la première sous-tâche de chaque tâche, sur la base d'un ensemble d'attributs opérationnels d'une première sous-tâche associée, dans lequel la fonction de récompense est définie dans la technique d'optimisation (204a4) ; et
(v) sélectionner un satellite admissible parmi les un ou plusieurs satellites admissibles ayant une valeur maximale de la fonction de récompense, sur la base de la contrainte de temps réel souple prédéfinie définie pour chaque tâche, en tant qu'agent de commande pour chaque tâche de la pluralité de tâches (204a5) ; et
dans lequel dans la phase dynamique, les tâches sont exécutées dans deux modes comprenant un mode série et un mode parallèle, dans lequel dans le mode parallèle d'exécution, la tâche dans la structure DAG est triée topologiquement, et les sous-tâches sont agencées en niveaux d'exécution, dans lequel l'agent de commande est configuré pour identifier un agent de commande dans chaque branche à l'intérieur d'une distance de saut *h* pour exécuter une partie des sous-tâches, dans lequel la planification de la pluralité de tâches dans la phase dynamique comprend les étapes consistant à :
(i) exécuter la première sous-tâche de chaque tâche de la pluralité de tâches, par un agent de commande associé sélectionné dans la phase statique (204b1) ;
(ii) identifier un ensemble de sous-tâches restantes pour chaque tâche de la pluralité de tâches, après l'exécution de la première sous-tâche et la suppression de la première sous-tâche d'une tâche associée (204b2) ;
(iii) trier une ou plusieurs sous-tâches présentes dans l'ensemble de sous-tâches restantes pour chaque tâche de la pluralité de tâches, dans un ordre topologique, sur la base des une ou plusieurs dépendances de chaque sous-tâche (204b3) ;
(iv) s'il existe une sous-tâche unique présente dans l'ensemble de sous-tâches restantes pour chaque tâche après tri dans l'ordre topologique, à un niveau d'exécution actuel d'un ou plusieurs niveaux d'exécution, alors :
(a) exécuter la sous-tâche unique par l'agent de commande associé sélectionné dans la phase statique, si une ou plusieurs exigences de ressources de la sous-tâche unique correspondent aux une ou plusieurs capacités de ressources de l'agent de commande associé sélectionné dans la phase statique et correspondent à la contrainte de temps réel souple prédéfinie ; et
(b) transférer la sous-tâche unique à d'autres satellites pour une exécution en utilisant un mécanisme de transfert, si les une ou plusieurs exigences de ressources de la sous-tâche unique ne correspondent pas aux une ou plusieurs capacités de ressources de l'agent de commande associé sélectionné dans la phase statique et ne correspondent pas à la contrainte de temps réel souple prédéfinie (204b4), dans lequel l'étape de transfert de la sous-tâche unique inclut :
i. calculer la valeur de la fonction de récompense pour chacun des un ou plusieurs satellites admissibles, pour exécuter la sous-tâche unique de chaque tâche, sur la base de l'ensemble d'attributs opérationnels de la sous-tâche unique (204b4d), dans lequel une récompense acquise localement, *Rₛₑᵣᵢₐₗ*, est évaluée en utilisant la fonction de récompense comme $\begin{matrix}{R}_{serial} = {\sum }_{i = 1}^{p} {R}_{ij} \\ = {\sum }_{i = 1}^{p} \frac{{T}_{i}^{Q}}{{T}_{i}^{wt} {L}_{COMP} {\left(T\right.}_{\left.ij\right)} {L}_{COMM} {\left(T\right.}_{\left.ij\right)}} \\ = {\sum }_{i = 1}^{p} \frac{{T}_{i}^{Q}}{{T}_{i}^{wt} {L}_{COMP} {\left(T\right.}_{\left.ij\right)}}\end{matrix}$ où *L_{COMM}*(*T*_{*ij*)} = 1, où Rᵢⱼ est une récompense acquise par l'agent de commande j pour exécuter la sous-tâche i, p est un nombre de sous-tâches indépendantes, ${T}_{i}^{wt}$ est un temps d'attente de la sous-tâche, *L*_{COMP}(*Tᵢⱼ*) est une latence de calcul, *L*_{COMM}(*Tᵢⱼ*) est une latence de communication, ${T}_{i}^{Q}$ est une priorité de tâche sans dimension ; et
ii. sélectionner un satellite admissible parmi les un ou plusieurs satellites admissibles présents dans le niveau de saut ayant la valeur maximale de la fonction de récompense, sur la base de la contrainte de temps réel souple prédéfinie définie pour chaque tâche, en tant qu'agent de commande pour la sous-tâche unique associée de chaque tâche et transférer la sous-tâche associée à un agent de commande associé, dans lequel le niveau de saut fait référence à un niveau de saut le plus proche de l'agent de commande associé (204b4e) ;
(v) s'il existe de multiples sous-tâches présentes dans l'ensemble de sous-tâches restantes pour chaque tâche après tri dans l'ordre topologique, au niveau d'exécution actuel d'un ou plusieurs niveaux d'exécution, alors :
(a) exécuter les multiples sous-tâches présentes dans l'ensemble de sous-tâches restantes pour chaque tâche après tri dans l'ordre topologique, au niveau d'exécution actuel, par l'agent de commande associé sélectionné dans la phase statique, si une ou plusieurs exigences de ressources des multiples sous-tâches correspondent aux une ou plusieurs capacités de ressources de l'agent de commande associé sélectionné dans la phase statique et correspondent à la contrainte de temps réel souple prédéfinie ; et
(b) transférer les multiples sous-tâches présentes dans l'ensemble de sous-tâches restantes pour chaque tâche après tri dans l'ordre topologique, au niveau d'exécution actuel à d'autres satellites pour une exécution en utilisant un mécanisme de transfert, si les une ou plusieurs exigences de ressources des multiples sous-tâches ne correspondent pas aux une ou plusieurs capacités de ressources de l'agent de commande associé sélectionné dans la phase statique et ne correspondent pas à la contrainte de temps réel souple prédéfinie (204b5) ; et
exécuter, via les un ou plusieurs processeurs matériels, la pluralité de tâches par la pluralité de satellites présents dans le groupe de satellites et les une ou plusieurs stations au sol, en utilisant la planification distribuée optimisée (206).

2. Procédé selon la revendication 1, dans lequel chaque sous-tâche de la pluralité de sous-tâches présentes dans chaque tâche, est associée à un ensemble d'attributs opérationnels comprenant (i) le temps d'attente, (ii) la latence de calcul, (iii) la latence de communication, et (iv) une priorité de tâche.

3. Procédé selon la revendication 1, dans lequel la pluralité de sous-tâches présentes dans chaque tâche sont exécutées à un ou plusieurs niveaux d'exécution, sur la base des une ou plusieurs dépendances de chaque sous-tâche sur des sous-tâches restantes de la pluralité de sous-tâches.

4. Procédé selon la revendication 1, dans lequel la pluralité de sous-tâches présentes dans chaque tâche sont une ou plusieurs parmi : (i) la tâche de collecte de données d'observation de la Terre, (ii) une ou plusieurs tâches d'analyse de données d'observation de la Terre, et (iii) une ou plusieurs tâches de communication de données d'observation de la Terre, et dans lequel chacune des une ou plusieurs tâches de collecte de données d'observation de la Terre est destinée à collecter des données d'observation de la Terre par chacun des un ou plusieurs satellites pour une région prédéfinie sur la Terre, chacune des une ou plusieurs tâches d'analyse de données d'observation de la Terre est destinée à analyser les données d'observation de la Terre par la pluralité de satellites ou les une ou plusieurs stations au sol pour déterminer une ou plusieurs inférences d'une tâche de collecte de données d'observation de la Terre associée, et chacune des une ou plusieurs tâches de communication de données d'observation de la Terre est l'une parmi (i) une sous-tâche d'échange de données et (ii) une sous-tâche d'échange de commandes, entre la pluralité de satellites et les une ou plusieurs stations au sol.

5. Procédé selon la revendication 1, dans lequel l'étape de calcul de la valeur de la fonction de récompense pour chacun des un ou plusieurs satellites admissibles est précédée par :
l'envoi d'un message de demande de transfert par l'agent de commande associé à un ou plusieurs satellites présents dans le niveau de saut pour exécuter la sous-tâche unique (204b4a) ;
la réception des une ou plusieurs capacités de ressources de chacun des un ou plusieurs satellites dans le niveau de saut, par l'agent de commande associé (204b4b) ; et
l'identification des un ou plusieurs satellites admissibles parmi les un ou plusieurs satellites présents dans le niveau de saut, pour exécuter la sous-tâche unique, sur la base des une ou plusieurs capacités de ressources de chacun de la pluralité de satellites, et des une ou plusieurs ressources requises pour la sous-tâche unique (204b4c).

6. Procédé selon la revendication 1, dans lequel si les un ou plusieurs satellites admissibles parmi les un ou plusieurs satellites présents dans le niveau de saut, ne sont pas identifiés pour exécuter la sous-tâche unique, sur la base des une ou plusieurs capacités de ressources de chacun de la pluralité de satellites, et des une ou plusieurs ressources requises pour la sous-tâche unique et ne correspondent pas à la contrainte de temps réel souple prédéfinie, alors la sous-tâche unique est transférée aux un ou plusieurs satellites présents dans le niveau de saut suivant.

7. Procédé selon la revendication 1, dans lequel le transfert des multiples sous-tâches présentes dans l'ensemble de sous-tâches restantes pour chaque tâche après tri dans l'ordre topologique, au niveau d'exécution actuel à d'autres satellites pour une exécution en utilisant le mécanisme de transfert, si les une ou plusieurs exigences de ressources des multiples sous-tâches ne correspondent pas aux une ou plusieurs capacités de ressources de l'agent de commande associé sélectionné dans la phase statique et ne correspondent pas à la contrainte de temps réel souple prédéfinie, comprend :
le partitionnement de chacune des multiples sous-tâches, sur la base d'une taille de partitionnement prédéfinie (204b5a) ;
l'envoi d'un message de demande de transfert par l'agent de commande associé aux un ou plusieurs satellites présents dans le niveau de saut pour exécuter les multiples sous-tâches (204b5b) ;
la réception des une ou plusieurs capacités de ressources de chacun des un ou plusieurs satellites dans le niveau de saut, par l'agent de commande associé (204b5c) ;
l'identification des un ou plusieurs satellites admissibles parmi les un ou plusieurs satellites présents dans le niveau de saut, pour exécuter les multiples sous-tâches après le partitionnement, sur la base des une ou plusieurs capacités de ressources de chaque satellite, et des une ou plusieurs ressources requises pour chacune des multiples sous-tâches (204b5d) ;
le calcul de la valeur de la fonction de récompense pour chacun des un ou plusieurs satellites admissibles, pour exécuter les multiples sous-tâches de chaque tâche après le partitionnement, sur la base de l'ensemble d'attributs opérationnels associés à chaque sous-tâche (204b5e) ; et
la sélection d'un satellite admissible parmi les un ou plusieurs satellites admissibles ayant la valeur maximale de la fonction de récompense, sur la base de la contrainte de temps réel souple prédéfinie définie pour chaque tâche, en tant qu'agent de commande pour exécuter les multiples sous-tâches de chaque tâche après le partitionnement et transférer les multiples sous-tâches de chaque tâche à un agent de commande associé, et
si les un ou plusieurs satellites admissibles parmi les un ou plusieurs satellites présents dans le niveau de saut, ne sont pas identifiés pour exécuter les multiples sous-tâches, sur la base des une ou plusieurs capacités de ressources de chaque satellite, et des une ou plusieurs ressources requises pour chacune des multiples sous-tâches et ne correspondent pas à la contrainte de temps réel souple prédéfinie, alors les multiples sous-tâches de chaque tâche sont distribuées aux un ou plusieurs satellites présents dans un niveau de saut suivant (204b5f).

8. Système (100) de planification de tâches distribuées dans un groupe de satellites pour l'analyse de données d'observation de la Terre, comprenant :
une mémoire (102) stockant des instructions ;
une ou plusieurs interfaces d'entrée/sortie (E/S) (106) ; et
un ou plusieurs processeurs matériels (104) couplés à la mémoire (102) via les une ou plusieurs interfaces E/S (106), dans lequel les un ou plusieurs processeurs matériels (104) sont configurés par les instructions pour :
recevoir une pluralité de tâches à exécuter par une pluralité de satellites présents dans le groupe de satellites et une ou plusieurs stations au sol connectées aux un ou plusieurs satellites, une contrainte de temps réel souple prédéfinie définie pour chaque tâche de la pluralité de tâches, une ou plusieurs exigences de ressources requises pour chaque tâche, et une ou plusieurs capacités de ressources de chacun des un ou plusieurs satellites et de chacune des une ou plusieurs stations au sol, dans lequel la pluralité de satellites dans le groupe de satellites sont organisées niveaux de saut, dans lequel la contrainte de temps réel souple prédéfinie est un délai de traitement maximal défini comme un temps d'achèvement dans lequel chaque tâche de la pluralité de tâches doit être achevée, dans lequel chaque tâche comprend une pluralité de sous-tâches et une ou plusieurs dépendances de chaque sous-tâche sur des sous-tâches restantes de la pluralité de sous-tâches, dans lequel chaque tâche est définie dans une structure de graphe acyclique dirigé, DAG, avec un flux de travail de tâche prédéfini pour l'exécution sur la base des dépendances ;
attribuer la pluralité de tâches à la pluralité de satellites présents dans le groupe de satellites et aux une ou plusieurs stations au sol, dans une phase statique et une phase dynamique dans une séquence, en utilisant une technique d'optimisation, pour obtenir une planification distribuée optimisée de la pluralité de tâches, dans lequel la planification des tâches dans la phase dynamique est effectuée, par un planificateur, qui prend en compte l'évolution de la connectivité entre satellites et entre satellites et stations au sol, ainsi que l'évolution de l'état des ressources et l'état des tâches, dans lequel la phase statique et la phase dynamique de l'algorithme de planification distribuée pour l'analyse de données d'observation de la Terre dans des satellites en orbite terrestre basse, LEO, utilise une puissance de calcul collective en orbite et au sol qui est requise pour satisfaire la contrainte de temps réel souple prédéfinie d'applications d'observation de la Terre, EO,
dans lequel l'attribution de la pluralité de tâches dans la phase statique comprend les étapes consistant à :
(i) identifier une première sous-tâche parmi la pluralité de sous-tâches pour chaque tâche, dans lequel la première sous-tâche est une tâche de collecte de données d'observation de la Terre ;
(ii) recevoir une ou plusieurs ressources requises pour la première sous-tâche de chaque tâche ;
(iii) identifier un ou plusieurs satellites admissibles parmi la pluralité de satellites, pour la première sous-tâche de chaque tâche, sur la base des une ou plusieurs capacités de ressources de chaque satellite, et des une ou plusieurs ressources requises pour la première sous-tâche ;
(iv) calculer une valeur d'une fonction de récompense pour chacun des un ou plusieurs satellites admissibles, pour exécuter la première sous-tâche de chaque tâche, sur la base d'un ensemble d'attributs opérationnels d'une première sous-tâche associée, dans lequel la fonction de récompense est définie dans la technique d'optimisation ; et
(v) sélectionner un satellite admissible parmi les un ou plusieurs satellites admissibles ayant une valeur maximale de la fonction de récompense, sur la base de la contrainte de temps réel souple prédéfinie définie pour chaque tâche, en tant qu'agent de commande pour chaque tâche de la pluralité de tâches ; et
dans lequel dans la phase dynamique, les tâches sont exécutées dans deux modes comprenant un mode série et un mode parallèle, dans lequel dans le mode parallèle d'exécution, la tâche dans la structure DAG est triée topologiquement, et les sous-tâches sont agencées en niveaux d'exécution, dans lequel l'agent de commande est configuré pour identifier un agent de commande dans chaque branche à l'intérieur d'une distance de saut *h* pour exécuter une partie des sous-tâches, dans lequel la planification de la pluralité de tâches dans la phase dynamique comprend les étapes consistant à :
(i) exécuter la première sous-tâche de chaque tâche de la pluralité de tâches, par un agent de commande associé sélectionné dans la phase statique ;
(ii) identifier un ensemble de sous-tâches restantes pour chaque tâche de la pluralité de tâches, après l'exécution de la première sous-tâche et la suppression de la première sous-tâche d'une tâche associée ;
(iii) trier une ou plusieurs sous-tâches présentes dans l'ensemble de sous-tâches restantes pour chaque tâche de la pluralité de tâches, dans un ordre topologique, sur la base des une ou plusieurs dépendances de chaque sous-tâche ;
(iv) s'il existe une sous-tâche unique présente dans l'ensemble de sous-tâches restantes pour chaque tâche après tri dans l'ordre topologique, à un niveau d'exécution actuel d'un ou plusieurs niveaux d'exécution, alors :
(a) exécuter la sous-tâche unique par l'agent de commande associé sélectionné dans la phase statique, si une ou plusieurs exigences de ressources de la sous-tâche unique correspondent aux une ou plusieurs capacités de ressources de l'agent de commande associé sélectionné dans la phase statique et correspondent à la contrainte de temps réel souple prédéfinie ; et
(b) transférer la sous-tâche unique à d'autres satellites pour une exécution en utilisant un mécanisme de transfert, si les une ou plusieurs exigences de ressources de la sous-tâche unique ne correspondent pas aux une ou plusieurs capacités de ressources de l'agent de commande associé sélectionné dans la phase statique et ne correspondent pas à la contrainte de temps réel souple prédéfinie, dans lequel l'étape de transfert de la sous-tâche unique inclut :
i. le calcul de la valeur de la fonction de récompense pour chacun des un ou plusieurs satellites admissibles, pour exécuter la sous-tâche unique de chaque tâche, sur la base de l'ensemble d'attributs opérationnels de la sous-tâche unique, dans lequel une récompense acquise localement, *Rₛₑᵣᵢₐₗ*, est évaluée en utilisant la fonction de récompense comme $\begin{matrix}{R}_{serial} = {\sum }_{i = 1}^{p} {R}_{ij} \\ = {\sum }_{i = 1}^{p} \frac{{T}_{i}^{Q}}{{T}_{i}^{wt} {L}_{COMP} {\left(T\right.}_{\left.ij\right)} {L}_{COMM} {\left(T\right.}_{\left.ij\right)}} \\ = {\sum }_{i = 1}^{p} \frac{{T}_{i}^{Q}}{{T}_{i}^{wt} {L}_{COMP} {\left(T\right.}_{\left.ij\right)}}\end{matrix}$ où *L_{COMM}*(*T*_{*ij*)} = 1, où Rᵢⱼ est une récompense acquise par l'agent de commande j pour exécuter la sous-tâche i, p est un nombre de sous-tâches indépendantes, ${T}_{i}^{wt}$ est un temps d'attente de la sous-tâche, *L*_{COMP}(*Tᵢⱼ*) est une latence de calcul, *L*_{COMM}(*Tᵢⱼ*) est une latence de communication, ${T}_{i}^{Q}$ est une priorité de tâche sans dimension ; et
ii. sélectionner un satellite admissible parmi les un ou plusieurs satellites admissibles présents dans le niveau de saut ayant la valeur maximale de la fonction de récompense, sur la base de la contrainte de temps réel souple prédéfinie définie pour chaque tâche, en tant qu'agent de commande pour la sous-tâche unique associée de chaque tâche et transférer la sous-tâche associée à un agent de commande associé, dans lequel le niveau de saut fait référence à un niveau de saut le plus proche de l'agent de commande associé ;
(v) s'il existe de multiples sous-tâches présentes dans l'ensemble de sous-tâches restantes pour chaque tâche après tri dans l'ordre topologique, au niveau d'exécution actuel d'un ou plusieurs niveaux d'exécution, alors :
(a) exécuter les multiples sous-tâches présentes dans l'ensemble de sous-tâches restantes pour chaque tâche après tri dans l'ordre topologique, au niveau d'exécution actuel, par l'agent de commande associé sélectionné dans la phase statique, si une ou plusieurs exigences de ressources des multiples sous-tâches correspondent aux une ou plusieurs capacités de ressources de l'agent de commande associé sélectionné dans la phase statique et correspondent à la contrainte de temps réel souple prédéfinie ; et
(b) transférer les multiples sous-tâches présentes dans l'ensemble de sous-tâches restantes pour chaque tâche après tri dans l'ordre topologique, au niveau d'exécution actuel à d'autres satellites pour une exécution en utilisant un mécanisme de transfert, si les une ou plusieurs exigences de ressources des multiples sous-tâches ne correspondent pas aux une ou plusieurs capacités de ressources de l'agent de commande associé sélectionné dans la phase statique et ne correspondent pas à la contrainte de temps réel souple prédéfinie ; et
exécuter la pluralité de tâches par la pluralité de satellites présents dans le groupe de satellites et les une ou plusieurs stations au sol, en utilisant la planification distribuée optimisée.

9. Système selon la revendication 8, dans lequel chaque sous-tâche de la pluralité de sous-tâches présentes dans chaque tâche, est associée à un ensemble d'attributs opérationnels comprenant (i) le temps d'attente, (ii) la latence de calcul, (iii) la latence de communication, et (iv) une priorité de tâche.

10. Système selon la revendication 8, dans lequel la pluralité de sous-tâches présentes dans chaque tâche sont exécutées à un ou plusieurs niveaux d'exécution, sur la base des une ou plusieurs dépendances de chaque sous-tâche sur des sous-tâches restantes de la pluralité de sous-tâches.

11. Système selon la revendication 8, dans lequel la pluralité de sous-tâches présentes dans chaque tâche sont une ou plusieurs parmi : (i) la tâche de collecte de données d'observation de la Terre, (ii) une ou plusieurs tâches d'analyse de données d'observation de la Terre, et (iii) une ou plusieurs tâches de communication de données d'observation de la Terre, et dans lequel chacune des une ou plusieurs tâches de collecte de données d'observation de la Terre est destinée à collecter des données d'observation de la Terre par chacun des un ou plusieurs satellites pour une région prédéfinie sur la Terre, chacune des une ou plusieurs tâches d'analyse de données d'observation de la Terre est destinée à analyser les données d'observation de la Terre par la pluralité de satellites ou les une ou plusieurs stations au sol pour déterminer une ou plusieurs inférences d'une tâche de collecte de données d'observation de la Terre associée, et chacune des une ou plusieurs tâches de communication de données d'observation de la Terre est l'une parmi (i) une sous-tâche d'échange de données et (ii) une sous-tâche d'échange de commandes, entre la pluralité de satellites et les une ou plusieurs stations au sol.

12. Système selon la revendication 8, dans lequel l'étape de calcul de la valeur de la fonction de récompense pour chacun des un ou plusieurs satellites admissibles est précédée par :
l'envoi d'un message de demande de transfert par l'agent de commande associé à un ou plusieurs satellites présents dans le niveau de saut pour exécuter la sous-tâche unique ;
la réception des une ou plusieurs capacités de ressources de chacun des un ou plusieurs satellites dans le niveau de saut, par l'agent de commande associé ; et
l'identification des un ou plusieurs satellites admissibles parmi les un ou plusieurs satellites présents dans le niveau de saut, pour exécuter la sous-tâche unique, sur la base des une ou plusieurs capacités de ressources de chaque satellite, et des une ou plusieurs ressources requises pour la sous-tâche unique.

13. Système selon la revendication 8, dans lequel les un ou plusieurs processeurs matériels (104) sont configurés pour transférer la sous-tâche unique aux un ou plusieurs satellites présents dans le niveau de saut suivant, si les un ou plusieurs satellites admissibles parmi les un ou plusieurs satellites présents dans le niveau de saut, ne sont pas identifiés pour exécuter la sous-tâche unique, sur la base des une ou plusieurs capacités de ressources de chaque satellite, et des une ou plusieurs ressources requises pour la sous-tâche unique et ne correspondent pas à la contrainte de temps réel souple prédéfinie.

14. Système selon la revendication 8, dans lequel les un ou plusieurs processeurs matériels (104) sont configurés pour transférer les multiples sous-tâches présentes dans l'ensemble de sous-tâches restantes pour chaque tâche après tri dans l'ordre topologique, au niveau d'exécution actuel à d'autres satellites pour une exécution en utilisant le mécanisme de transfert, si les une ou plusieurs exigences de ressources des multiples sous-tâches ne correspondent pas aux une ou plusieurs capacités de ressources de l'agent de commande associé sélectionné dans la phase statique et ne correspondent pas à la contrainte de temps réel souple prédéfinie, par :
le partitionnement de chacune des multiples sous-tâches, sur la base d'une taille de partitionnement prédéfinie ;
l'envoi d'un message de demande de transfert par l'agent de commande associé aux un ou plusieurs satellites présents dans le niveau de saut pour exécuter les multiples sous-tâches ;
la réception des une ou plusieurs capacités de ressources de chacun des un ou plusieurs satellites dans le niveau de saut, par l'agent de commande associé ;
l'identification des un ou plusieurs satellites admissibles parmi les un ou plusieurs satellites présents dans le niveau de saut, pour exécuter les multiples sous-tâches après le partitionnement, sur la base des une ou plusieurs capacités de ressources de chacun de la pluralité de satellites, et des une ou plusieurs ressources requises pour chacune des multiples sous-tâches ;
le calcul de la valeur de la fonction de récompense pour chacun des un ou plusieurs satellites admissibles, pour exécuter les multiples sous-tâches de chaque tâche après le partitionnement, sur la base de l'ensemble d'attributs opérationnels associés à chaque sous-tâche ;
la sélection d'un satellite admissible parmi les un ou plusieurs satellites admissibles ayant la valeur maximale de la fonction de récompense, sur la base de la contrainte de temps réel souple prédéfinie définie pour chaque tâche, en tant qu'agent de commande pour exécuter les multiples sous-tâches de chaque tâche après le partitionnement et transférer les multiples sous-tâches de chaque tâche à un agent de commande associé ; et
la distribution des multiples sous-tâches de chaque tâche aux un ou plusieurs satellites présents dans un niveau de saut suivant, si les un ou plusieurs satellites admissibles parmi les un ou plusieurs satellites présents dans le niveau de saut, ne sont pas identifiés pour exécuter les multiples sous-tâches, sur la base des une ou plusieurs capacités de ressources de chacun de la pluralité de satellites, et des une ou plusieurs ressources requises pour chacune des multiples sous-tâches et ne correspondent pas à la contrainte de temps réel souple prédéfinie.

15. Un ou plusieurs supports de stockage d'informations lisibles par machine non transitoires comprenant une ou plusieurs instructions qui, lorsqu'elles sont exécutées par un ou plusieurs processeurs matériels, amènent :
la réception d'une pluralité de tâches à exécuter par une pluralité de satellites présents dans un groupe de satellites et une ou plusieurs stations au sol connectées aux un ou plusieurs satellites, une contrainte de temps réel souple prédéfinie définie pour chaque tâche de la pluralité de tâches, une ou plusieurs exigences de ressources requises pour chaque tâche, et une ou plusieurs capacités de ressources de chacun des un ou plusieurs satellites et de chacune des une ou plusieurs stations au sol, dans lequel la pluralité de satellites dans le groupe de satellites sont organisées niveaux de saut, dans lequel la contrainte de temps réel souple prédéfinie est un délai de traitement maximal défini comme un temps d'achèvement dans lequel chaque tâche de la pluralité de tâches doit être achevée, dans lequel chaque tâche comprend une pluralité de sous-tâches et une ou plusieurs dépendances de chaque sous-tâche sur des sous-tâches restantes de la pluralité de sous-tâches, dans lequel chaque tâche est définie dans une structure de graphe acyclique dirigé, DAG, avec un flux de travail de tâche prédéfini pour l'exécution sur la base des dépendances ;
l'attribution de la pluralité de tâches à la pluralité de satellites présents dans le groupe de satellites et aux une ou plusieurs stations au sol, dans une phase statique et une phase dynamique dans une séquence, en utilisant une technique d'optimisation, pour obtenir une planification distribuée optimisée de la pluralité de tâches, dans lequel la planification des tâches dans la phase dynamique est effectuée, par un planificateur, qui prend en compte l'évolution de la connectivité entre satellites et entre satellites et stations au sol, de changer l'état des ressources et l'état des tâches, dans lequel la phase statique et la phase dynamique de l'algorithme de planification distribuée pour l'analyse de données d'observation de la Terre dans des satellites en orbite terrestre basse, LEO, utilise une puissance de calcul collective en orbite et au sol qui est requise pour satisfaire la contrainte de temps réel souple prédéfinie d'applications d'observation de la Terre, EO,
dans lequel l'attribution de la pluralité de tâches dans la phase statique comprend les étapes consistant à :
(i) identifier une première sous-tâche parmi la pluralité de sous-tâches pour chaque tâche, dans lequel la première sous-tâche est une tâche de collecte de données d'observation de la Terre ;
(ii) recevoir une ou plusieurs ressources requises pour la première sous-tâche de chaque tâche ;
(iii) identifier un ou plusieurs satellites admissibles parmi la pluralité de satellites, pour la première sous-tâche de chaque tâche, sur la base des une ou plusieurs capacités de ressources de chaque satellite, et des une ou plusieurs ressources requises pour la première sous-tâche ;
(iv) calculer une valeur d'une fonction de récompense pour chacun des un ou plusieurs satellites admissibles, pour exécuter la première sous-tâche de chaque tâche, sur la base d'un ensemble d'attributs opérationnels d'une première sous-tâche associée, dans lequel la fonction de récompense est définie dans la technique d'optimisation ; et
(v) sélectionner un satellite admissible parmi les un ou plusieurs satellites admissibles ayant une valeur maximale de la fonction de récompense, sur la base de la contrainte de temps réel souple prédéfinie définie pour chaque tâche, en tant qu'agent de commande pour chaque tâche de la pluralité de tâches ; et
dans lequel dans la phase dynamique, les tâches sont exécutées dans deux modes comprenant un mode série et un mode parallèle, dans lequel dans le mode parallèle d'exécution, la tâche dans la structure DAG est triée topologiquement, et les sous-tâches sont agencées en niveaux d'exécution, dans lequel l'agent de commande est configuré pour identifier un agent de commande dans chaque branche à l'intérieur d'une distance de saut *h* pour exécuter une partie des sous-tâches, dans lequel la planification de la pluralité de tâches dans la phase dynamique comprend les étapes consistant à :
(i) exécuter la première sous-tâche de chaque tâche de la pluralité de tâches, par un agent de commande associé sélectionné dans la phase statique ;
(ii) identifier un ensemble de sous-tâches restantes pour chaque tâche de la pluralité de tâches, après l'exécution de la première sous-tâche et la suppression de la première sous-tâche d'une tâche associée ;
(iii) trier une ou plusieurs sous-tâches présentes dans l'ensemble de sous-tâches restantes pour chaque tâche de la pluralité de tâches, dans un ordre topologique, sur la base des une ou plusieurs dépendances de chaque sous-tâche ;
(iv) s'il existe une sous-tâche unique présente dans l'ensemble de sous-tâches restantes pour chaque tâche après tri dans l'ordre topologique, à un niveau d'exécution actuel d'un ou plusieurs niveaux d'exécution, alors :
(a) exécuter la sous-tâche unique par l'agent de commande associé sélectionné dans la phase statique, si une ou plusieurs exigences de ressources de la sous-tâche unique correspondent aux une ou plusieurs capacités de ressources de l'agent de commande associé sélectionné dans la phase statique et correspondent à la contrainte de temps réel souple prédéfinie ; et
(b) transférer la sous-tâche unique à d'autres satellites pour une exécution en utilisant un mécanisme de transfert, si les une ou plusieurs exigences de ressources de la sous-tâche unique ne correspondent pas aux une ou plusieurs capacités de ressources de l'agent de commande associé sélectionné dans la phase statique et ne correspondent pas à la contrainte de temps réel souple prédéfinie, dans lequel l'étape de transfert de la sous-tâche unique inclut :
i. le calcul de la valeur de la fonction de récompense pour chacun des un ou plusieurs satellites admissibles, pour exécuter la sous-tâche unique de chaque tâche, sur la base de l'ensemble d'attributs opérationnels de la sous-tâche unique, dans lequel une récompense acquise localement, *Rₛₑᵣᵢₐₗ*, est évaluée en utilisant la fonction de récompense comme $\begin{matrix}{R}_{serial} = {\sum }_{i = 1}^{p} {R}_{ij} \\ = {\sum }_{i = 1}^{p} \frac{{T}_{i}^{Q}}{{T}_{i}^{wt} {L}_{COMP} {\left(T\right.}_{\left.ij\right)} {L}_{COMM} {\left(T\right.}_{\left.ij\right)}} \\ = {\sum }_{i = 1}^{p} \frac{{T}_{i}^{Q}}{{T}_{i}^{wt} {L}_{COMP} {\left(T\right.}_{\left.ij\right)}}\end{matrix}$ où *L_{COMM}*(*Tᵢⱼ*) = 1, où Rᵢⱼ est une récompense acquise par l'agent de commande j pour exécuter la sous-tâche i, p est un nombre de sous-tâches indépendantes, ${T}_{i}^{wt}$ est un temps d'attente de la sous-tâche, *L*_{COMP}(*Tᵢⱼ*) est une latence de calcul, *L*_{COMM}(*Tᵢⱼ*) est une latence de communication, ${T}_{i}^{Q}$ est une priorité de tâche sans dimension ; et
ii. sélectionner un satellite admissible parmi les un ou plusieurs satellites admissibles présents dans le niveau de saut ayant la valeur maximale de la fonction de récompense, sur la base de la contrainte de temps réel souple prédéfinie définie pour chaque tâche, en tant qu'agent de commande pour la sous-tâche unique associée de chaque tâche et transférer la sous-tâche associée à un agent de commande associé, dans lequel le niveau de saut fait référence à un niveau de saut le plus proche de l'agent de commande associé ;
(v) s'il existe de multiples sous-tâches présentes dans l'ensemble de sous-tâches restantes pour chaque tâche après tri dans l'ordre topologique, au niveau d'exécution actuel d'un ou plusieurs niveaux d'exécution, alors :
(a) exécuter les multiples sous-tâches présentes dans l'ensemble de sous-tâches restantes pour chaque tâche après tri dans l'ordre topologique, au niveau d'exécution actuel, par l'agent de commande associé sélectionné dans la phase statique, si une ou plusieurs exigences de ressources des multiples sous-tâches correspondent aux une ou plusieurs capacités de ressources de l'agent de commande associé sélectionné dans la phase statique et correspondent à la contrainte de temps réel souple prédéfinie ; et
(b) transférer les multiples sous-tâches présentes dans l'ensemble de sous-tâches restantes pour chaque tâche après tri dans l'ordre topologique, au niveau d'exécution actuel à d'autres satellites pour une exécution en utilisant un mécanisme de transfert, si les une ou plusieurs exigences de ressources des multiples sous-tâches ne correspondent pas aux une ou plusieurs capacités de ressources de l'agent de commande associé sélectionné dans la phase statique et ne correspondent pas à la contrainte de temps réel souple prédéfinie ; et
exécuter la pluralité de tâches par la pluralité de satellites présents dans le groupe de satellites et les une ou plusieurs stations au sol, en utilisant la planification distribuée optimisée.
